# EUROPEAN PATENT APPLICATION

(11) **EP 2 418 866 A2**
(43) Date of publication of application: **15.02.2012**
(21) Application number: 11176388.4
(22) Date of filing: 03.08.2011
(51) Int. Cl.: H04N 13/04

(54) **Method for operating image display apparatus**

(30) Priority: 11.08.2010 KR 20100077411; 12.08.2010 KR 20100077927
(71) Applicant: LG Electronics, Seoul, 150-721 (KR)
(72) Inventor: Lee, Hyungnam, 137-724 Seoul (KR); Kim Uniyoung, 137-724 Seoul (KR); Kim, Jin, 137-724 Seoul (KR); Koo, Sangjun, 137-724 Seoul (KR); Jang, Saehun, 137-724 Seoul (KR); Lee, Gangseub, 137-724 Seoul (KR); Kim, Hansoo, 137-724 Seoul (KR)
(74) Representative: Cabinet Plasseraud

(57) **Abstract**

An image display apparatus and a method for operating the same may be provided. A display that is arranged substantially horizontally may be used so content may be variously and conveniently used to improve user convenience. Social network services may also be more conveniently used.

## Description

### CROSS-REFERENCE TO RELATED APPLICATION

This application claims priority from Korean Application No. 10-2010-0077411, filed August 11, 2010 and Korean Application No. 10-2010-0077927, filed August 12, 2010, the subject matters of which are incorporated herein by reference.

### BACKGROUND

### 1. Field

Embodiments may relate to an image display apparatus and/or a method for operating an image display apparatus, wherein content may be variously and conveniently used to improve user convenience.

### 2. Background

An image display apparatus may display an image that can be viewed by the user. The image display apparatus may display a broadcast that the user has selected from among broadcasts transmitted by a broadcast station. Broadcasting is transitioning from analog broadcasting to digital broadcasting.

Digital broadcasting may transmit digital video and audio signals. Thus, compared to analog broadcasting, digital broadcasting may be more robust to external noise, resulting in less data loss, and may also be advantageous in terms of error correction while providing clear high-resolution images or screens. Digital broadcasting may also provide bi-directional services.

As diversity of functions and content of the image display apparatus have increased, studies have been conducted on screen arrangement, screen switching, and/or content use methods optimized for efficient use of various functions and content of the image display apparatus.

Additionally, stereoscopic images and stereoscopic image technologies have been gradually generalized and put into practical use not only in computer graphics but also in various other environments and technologies.

### BRIEF DESCRIPTION OF THE DRAWINGS

Arrangements and embodiments may be described in detail with reference to the following drawings in which like reference numerals refer to like elements and wherein:

FIG. 1 is a block diagram of an image display apparatus according to an embodiment;

FIG. 2 is a block diagram showing a controller of FIG. 1;

FIG. 3 illustrates various formats of a 3D image;

FIG. 4 illustrates an operation of a 3D viewing device according to a format shown in FIG. 3;

FIG. 5 illustrates scaling schemes of a 3D image signal according to an embodiment;

FIG. 6 illustrates image formation by a left-eye image and a right-eye image;

FIG. 7 illustrates a perceived depth of a 3D image according to a distance between a left-eye image and a right-eye image;

FIG. 8 illustrates an exemplary arrangement of a display of the image display apparatus of FIG. 1;

FIG. 9 illustrates a viewing device and an image display apparatus according to an embodiment;

FIG. 10 is a block diagram of the 3D viewing device and the image display apparatus of FIG. 9;

FIGs. 11 to 13B illustrate examples of a method for operating an image display apparatus according to an embodiment;

FIGs. 14 and 15 are flow charts of a method for operating an image display apparatus according to an embodiment;

FIGs. 16 to 22 illustrate examples of a method for operating an image display apparatus according to an embodiment;

FIG. 23 is a flow chart of a method for operating an image display apparatus according to an embodiment; and

FIGs. 24 to 29B illustrate examples of a method for operating an image display apparatus according to an embodiment.

### DETAILED DESCRIPTION

Exemplary embodiments may be described with reference to the attached drawings.

The words "module" or "unit", which may be added to an end of terms describing components, may be merely used for ease of explanation and may have no specific meaning or function with respect to components. Thus, the words "module" and "unit" may be used interchangeably.

As used hereinafter, items, objects, etc. may be described as being 3D, which corresponds to perceived 3D. In other words, an object may be perceived by a user as being 3D.

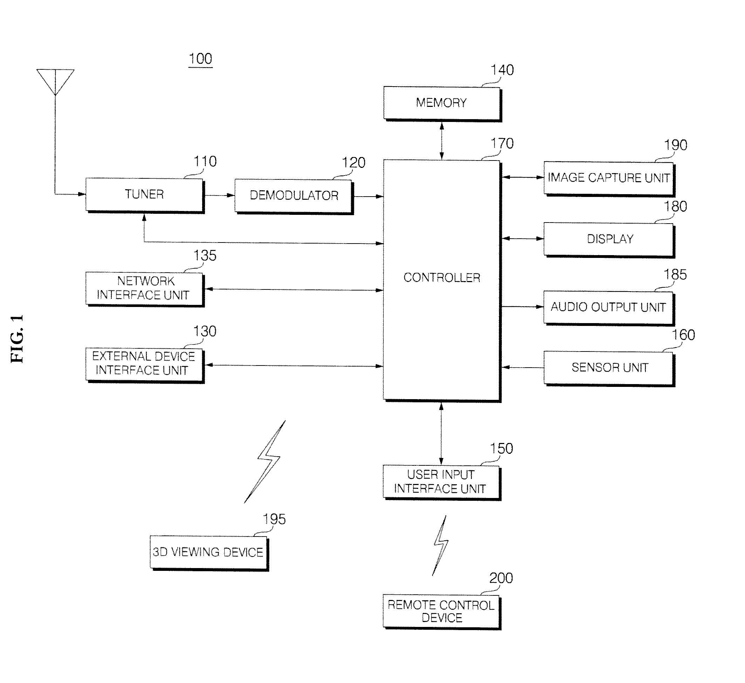

FIG. 1 is a block diagram of an image display apparatus according to an embodiment. Other embodiments and configurations may also be provided.

As shown in FIG. 1, an image display apparatus 100 may include a tuner 110, a demodulator 120, an external device interface unit 130, a network interface unit 135, a memory 140, a user input interface unit 150, a sensor unit 160, a controller 170, a display 180, an audio output unit 185, an image capture unit 190, and a 3D viewing device 195.

The tuner 110 may tune to a Radio Frequency (RF) broadcast signal corresponding to a channel selected by a user from among RF broadcast signals received through an antenna or corresponding to each of the stored channels. The tuned RF broadcast signal may be converted into an Intermediate Frequency (IF) signal or a baseband video or audio signal.

For example, if the tuned RF broadcast signal is a digital broadcast signal, the tuned RF broadcast signal may be converted into a digital IF (DIF) signal and, if the tuned RF broadcast signal is an analog broadcast signal, the tuned RF broadcast signal may be converted into an analog baseband video/audio signal (Composite Video Baseband Signal (CVBS)/Sound IF (SIF)). That is, the tuner 110 may process a digital broadcast signal or an analog broadcast signal. The analog baseband video/audio signal (CVBS/SIF) output from the tuner 110 may be directly input to the controller 170.

The tuner 110 may additionally receive a single-carrier RF broadcast signal according to an Advanced Television System Committee (ATSC) scheme or a multiple-carrier RF broadcast signal according to a Digital Video Broadcasting (DVB) scheme.

The tuner 110 may sequentially tune to the RF broadcast signals of all the broadcast channels stored through a channel storage function from among the RF broadcast signals received through the antenna, and may convert the signals into IF signals or baseband video or audio signals.

The demodulator 120 may receive the converted DIF signal from the tuner 110 and perform a demodulation operation.

For example, if the DIF signal output from the tuner 110 is based on the ATSC system, the demodulator 120 may perform 8-Vestigial Side Band (VSB) modulation. The demodulator 120 may perform channel decoding. The demodulator 120 may include a trellis decoder, a deinterleaver, a Reed-Solomon decoder and/or the like to perform trellis decoding, deinterleaving and Reed-Solomon decoding.

For example, if the DIF signal output from the tuner 110 is based on the DVB system, the demodulator 120 may perform Coded Orthogonal Frequency Division Multiple Access (GOFDMA) modulation. The demodulator 120 may also perform channel decoding. The demodulator 120 may include a convolutional decoder, a deinterleaver, a Reed-Solomon decoder and/or the like to perform convolutional decoding, deinterleaving and/or Reed-Solomon decoding.

The demodulator 120 may perform demodulation and channel decoding and may then output a Transport Stream (TS) signal. The TS signal may be a signal in which an image signal, an audio signal and a data signal are multiplexed. For example, the TS signal may be an MPEG-2 TS in which an MPEG-2 image signal, a Dolby AC-3 audio signal and/or the like are multiplexed. More specifically, the MPEG-2 TS may include a 4-byte header and a 184-byte payload.

The demodulator 120 may include separate demodulators according to the ATSC scheme and the DVB scheme. That is, the demodulator 120 may include an ATSC modulator and a DVB demodulator.

The TS signal output from the demodulator 120 may be input to the controller 170. The controller 170 may perform demultiplexing, image/audio signal processing and/or the like, and may then output an image through the display 180 and may output audio through the audio output unit 185.

The external device interface unit 130 may transmit or receive data to or from an external device connected to the interface unit 130. The external device interface unit 130 may include an A/V input/output unit or a wireless communication unit.

The external device interface unit 130 may be connected to an external device such as a Digital Versatile Disc (DVD) player, a Blu-ray player, a game console, a camcorder, a (notebook) computer, or another appropriate type of external device, in a wired/wireless manner. The external device interface unit 130 may send an image signal, an audio signal and/or a data signal received from the connected external device to the controller 170 of the image display apparatus 100. The image signal, the audio signal or the data signal processed by the controller 170 may be output to the connected external device. To accomplish this, the external device interface unit 130 may include an A/V input/output unit and/or a wireless communication unit.

The A/V input/output unit may include a Universal Serial Bus (USB) port, a CVBS terminal, a component terminal, an S-video terminal (analog), a Digital Visual Interface (DVI) terminal, a High Definition Multimedia Interface (HDMI) terminal, an RGB terminal, and a D-SUB terminal for inputting the image signal and the audio signal from the external device to the image display apparatus 100.

The wireless communication unit may perform wireless Local Area Network (LAN) communication with another electronic device. The image display apparatus 100 may be connected to another electronic device over a network according to the communication standard such as Bluetooth, Radio Frequency Identification (RFID), Infrared Data Association (IrDA), Ultra Wideband (UWB), ZigBee, Digital Living Network Alliance (DLNA), or another appropriate type of communication protocol based on the desired characteristics.

The external device interface unit 130 may be connected to various set-top boxes through at least one of the above-described various terminals so as to perform an input/output operation with the set-top boxes.

The external device interface unit 130 may transmit or receive data to or from the 3D viewing device 195.

The network interface unit 135 may provide an interface for connecting the image display apparatus 100 to a wired/wireless network including an Internet network. The network interface unit 135 may include an Ethernet port for connection with a wired network. The network interface unit 135 may also use communication standards such as wireless LAN (WLAN) (Wi-Fi), wireless broadband (Wibro), world interoperability for microwave access (WiMax), high speed downlink packet access (HSDPA), or the like for connection with a wireless network.

The network interface unit 135 may receive content or data provided by an Internet or content provider or a network manager over a network. That is, the network interface unit 135 may receive content such as movies, advertisements, games, VOD, or broadcast signals and information associated with the content provided by the Internet or content provider over a network. The network interface unit 135 may receive update information and update files of firmware provided by the network manager. The network interface unit 135 may transmit data to the Internet or content provider or to the network manager.

Content may be reached through the network interface 135 as well as the tuner 110, the external device interface 130, the memory 140, or another appropriate data I/O interface. The content may include broadcast programs, multimedia content, or the like, as well as data associated therewith such as icons, thumbnails, EPG, or the like. As used herein, content may also include control buttons or icons configured to execute prescribed operations on the image display apparatus 100.

The network interface unit 135 may be connected to, for example, an Internet Protocol TV (IPTV) to receive and transmit an image, audio or data signal processed by a set-top box for IPTV to the controller 170 and may transmit signals processed by the controller 170 to the set-top box for IPTV in order to enable bidirectional communication.

The IPTV may include an ADSL-TV, a VDSL-TV, an FTTH-TV and/or the like according to type of the transmission network and/or may include a TV over DSL, a Video over DSL, a TV over IP (TVIP), a Broadband TV (BTV), or the like. The IPTV may include an Internet TV capable of Internet access or a full-browsing TV.

The memory 140 may store a program for performing signal processing and control in the controller 170, and may store a processed image, audio or data signal.

The memory 140 may perform a function to temporarily store an image, audio and/or data signal input through the external device interface unit 130. The memory 140 may store information about predetermined broadcast channels through a channel storage function such as a channel map.

The memory 140 may include at least one of a flash memory storage medium, a hard disk storage medium, a multimedia card micro medium, a card memory (e.g., SD memory, XD memory, and/or the like), a RAM, a ROM (EEPROM or the like), or another appropriate type of storage device. The image display apparatus 100 may reproduce and provide a file (e.g. a moving image file, a still image file, a music file, a document file, or the like) stored in the memory 140 to the user.

Although FIG. 1 shows an example in which the memory 140 is provided separately from the controller 170, embodiments are not limited to this example. The memory 140 may be included in the controller 170.

The user input interface unit 150 may send a signal input by the user to the controller 170 and/or send a signal from the controller 170 to the user.

For example, the user input interface unit 150 may receive a user input signal (e.g. such as power on/off, channel selection or screen setup) from a remote control device 200 (or remote controller) or may transmit a signal from the controller 170 to the remote control device 200 according to various communication schemes such as a Radio Frequency (RF) communication scheme or an Infrared (IR) communication scheme.

The user input interface unit 150 may send a user input signal input through a local key (not shown) such as a power key, a channel key, a volume key, or a setup value to the controller 170.

The sensor unit 160 may sense a position of a user or gestures made by the user and/or a position of the 3D viewing device 195. The sensor unit 160 may include a touch sensor, a voice sensor, a position sensor, a motion sensor, a gyro sensor, and/or the like.

A signal indicating a sensed position or a gesture of the user and/or a sensed position of the 3D viewing device 195 may be input to the controller 170. This signal may also be input to the controller 170 through the user input interface unit 150.

The controller 170 may demultiplex the TS signal received from the tuner 110, the demodulator 120 or the external device interface unit 130 and/or may process demultiplexed signals to generate and output image or audio signals.

The image signal processed by the controller 170 may be input to the display 180 such that an image corresponding to the image signal is displayed on the display 180. The image signal processed by the controller 170 may also be input to an external output device through the external device interface unit 130.

The audio signal processed by the controller 170 may be audibly output through the audio output unit 185. The audio signal processed by the controller 170 may be input to an external output device through the external device interface unit 130.

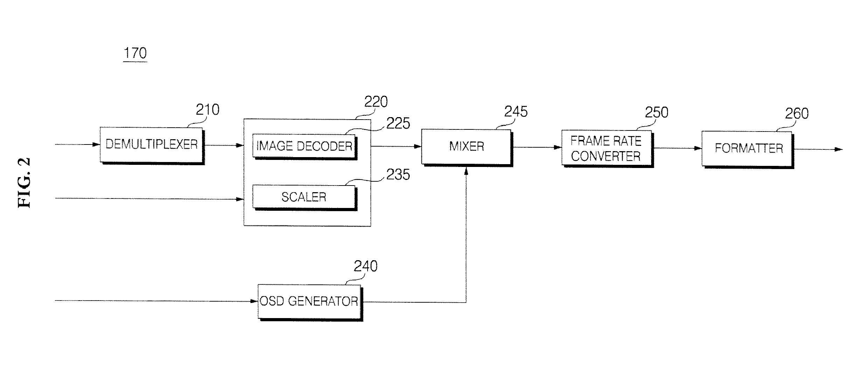

Although not shown in FIG. 1, the controller 170 may include a demultiplexer, an image processing unit, and/or the like as described below with reference to FIG. 2.

The controller 170 may control an overall operation of the image display apparatus 100. For example, the controller 170 may control the tuner 110 to tune to an RF broadcast corresponding to a channel selected by the user or a stored channel.

The controller 170 may control the image display apparatus 100 based on a user command input through the user input interface unit 150 and/or an internal program.

For example, the controller 170 may control the tuner 110 to receive the signal of a channel selected based on a predetermined channel selection command received through the user input interface unit 150. The controller 170 may then process the image, audio and/or data signal of the selected channel. The controller 170 may allow information of the channel selected by the user to be output through the display 180 or the audio output unit 185 together with the image and/or audio signal.

The controller 170 may allow an image or audio signal received from the external device (e.g. a camera or a camcorder) through the external device interface unit 130 to be output through the display 180 or the audio output unit 185 based on an external device image reproduction command received through the user input interface unit 150.

The controller 170 may control the display 180 to display an image. For example, the controller 170 may allow a broadcast image input through the tuner 110, an external input image input through the external device interface unit 130, an image input through the network interface unit 135, and/or an image stored in the memory 140 to be displayed on the display 180.

The image displayed on the display 180 may be a still image, a moving image, a 2D image and/or a 3D image.

The controller 170 may generate and display a predetermined object in the image displayed on the display 180 as a 3D object. For example, the object may be at least one of a web page (e.g. newspaper, magazine, or the like), an Electronic Program Guide (EPG), various menus, a widget, an icon, a still image, a moving image, and/or text. Other types of objects may also be provided.

Such a 3D object may provide a sense of perceived depth different from that of the image displayed on the display 180. The 3D object may be processed such that the 3D object appears to be located in front of the image displayed on the display 180.

The controller 170 may determine a user's position based on an image captured using the image capture unit 190. The controller 170 can obtain a distance (z-axis coordinate), for example, between the user and the image display apparatus 100. The controller may obtain an X-axis coordinate and a y-axis coordinate on the display 180 corresponding to the user's position.

On the other hand, the image display apparatus 100 may further include a channel browsing processing unit for generating a thumbnail image corresponding to a channel signal or an external input signal. The channel browsing processing unit may receive a Transport Stream (TS) signal output from the demodulator 120 or a TS signal output from the external device interface unit 130, extract an image from the received TS signal, and generate a thumbnail image. The generated thumbnail image may be input to the controller 170 without conversion or after being encoded. The generated thumbnail image may be input to the controller 170 after being encoded into a stream format. The controller 170 may display a thumbnail list including a plurality of thumbnail images on the display 180 using the received thumbnail images. The thumbnail list may be displayed in a brief viewing manner in which the thumbnail list is displayed in a portion of the display 180 on which an image is being displayed, or in a full viewing manner in which the thumbnail list is displayed over most of the display 180. Thumbnail images in the thumbnail list may be sequentially updated.

Examples of thumbnails (or thumbnail images) and methods of using thumbnails may be described in U.S. Application 12/651,730, filed January 4, 2010, the subject matter of which is incorporated herein by reference.

The display 180 may convert an image signal, a data signal, an OSD signal or a control signal processed by the controller 170 or an image signal, data signal or a control signal received through the external device interface unit 130, and may generate a drive signal.

The display 180 may include a Plasma Display Panel (PDP), a Liquid Crystal Display (LCD), an Organic Light Emitting Diode (OLED) display, and/or a flexible display. The display 180 may include a 3D display. Other types of display may also be provided.

The display 180 for 3D image viewing may be divided into a supplementary display type and a single display type.

In the single display type, a 3D image may be implemented on the display 180 without a separate subsidiary device (e.g. glasses). Examples of the single display type may include various types, such as a lenticular type and a parallax barrier type.

In the supplementary display type, 3D imagery may be implemented using a subsidiary device as the 3D viewing device 195, in addition to the display 180. Examples of the supplementary display type may include various types, such as a Head-Mounted Display (HMD) type and a glasses type. The glasses type may be divided into a passive type such as a polarized glasses type and an active type such as a shutter glasses type. The HMD type may be divided into a passive type and an active type.

Embodiments may be described focusing on an example where the 3D viewing device 195 is 3D glasses that enable 3D image viewing. The 3D glasses 195 may include passive-type polarized glasses or active-type shutter glasses. The 3D glasses 195 may also be described as conceptually including the HMD type.

The display 180 may include a touch screen and may function as an input device as well as an output device.

The audio output unit 185 may receive the audio signal processed by the controller 170 (for example, a stereo signal, a 3.1 channel signal or a 5.1 channel signal) and may output corresponding audio. The audio output unit 185 may be implemented using various types of speakers.

The image capture unit 190 may capture an image of the user. Although the image capture unit 190 may be implemented using one camera, embodiments are not limited to one camera and the image capture unit 190 may be implemented using a plurality of cameras. The image capture unit 190 may be provided on an upper portion of the display 180. Information of the image captured by the image capture unit 190 may be input to the controller 170.

The controller 170 may sense user gestures by the image captured using the image capture unit 190, the signal sensed using the sensing unit 160 and/or a combination thereof.

The remote control device 200 may transmit a user input signal to the user input interface unit 150. The remote control device 200 may use Bluetooth, Radio Frequency Identification (RFID) communication, IR communication, Ultra Wideband (UWB), ZigBee, or the like. The remote control device 200 may receive the image, audio, or data signal output from the user input interface unit 150 and may then display and/or audibly output the received signal.

The image display apparatus 100 may be a fixed digital broadcast receiver capable of receiving at least one of an ATSC (8-VSB) digital broadcast, a DVB-T (COFDM) digital broadcast or an ISDB-T (BST-OFDM) digital broadcast, and/or a mobile digital broadcast receiver capable of receiving at least one of a terrestrial DMB digital broadcast, a satellite DMB digital broadcast, an ATSC-M/H digital broadcast, a DVB-H (COFDM) digital broadcast or a media forward link only digital broadcast. The image display apparatus 100 may be a cable, satellite or IPTV digital broadcast receiver.

The image display apparatus may include a TV receiver, a mobile phone, a smart phone, a notebook computer, a digital broadcast terminal, a Personal Digital Assistant (PDA), a Portable Multimedia Player (PMP), and/or the like.

FIG. 1 is a block diagram of the image display apparatus 100 according to one embodiment. Some of the components of the image display apparatus 100 shown in the block diagram may be combined or omitted or other components may be added thereto based on a specification of the image display apparatus 100 that is actually implemented. That is, two or more components of the image display apparatus 100 may be combined into one component or one component thereof may be divided into two or more components, as needed. Functions of the components described below are only examples to describe embodiments and specific operations and units thereof do not limit the scope of the embodiments.

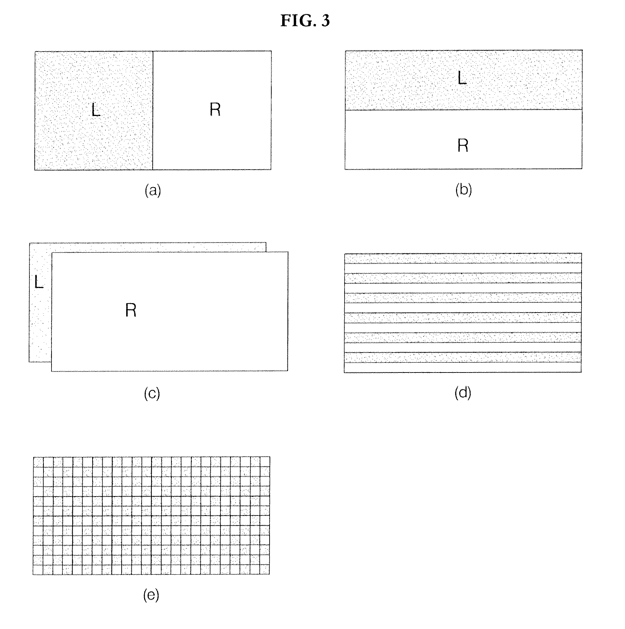

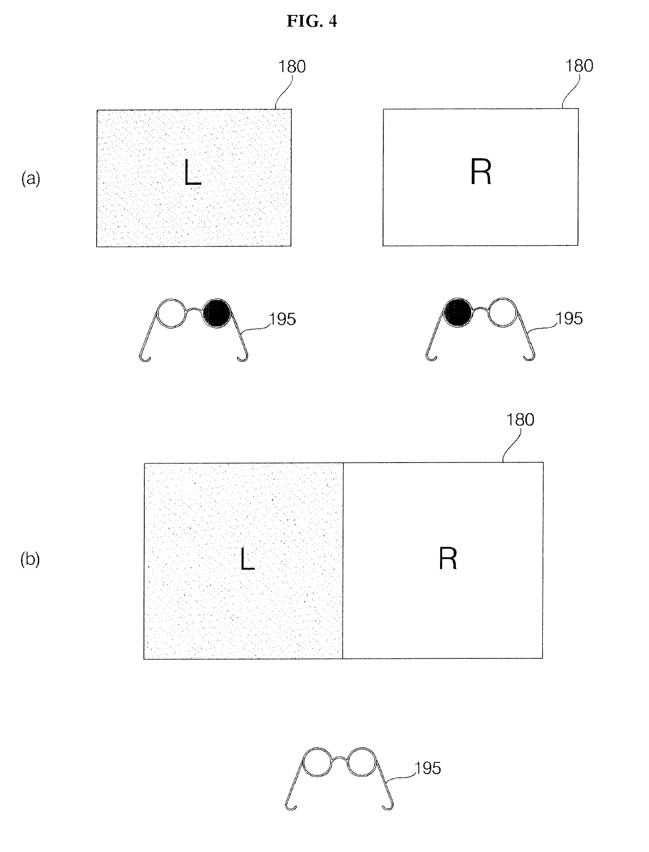

FIG. 2 is a block diagram showing the controller 170 of FIG. 1. FIG. 3 illustrates various formats of a 3D image, and FIG. 4 illustrates an operation of a 3D viewing device according to a format shown in FIG. 3.

As shown in FIG. 2, the controller 170 may include a demultiplexer 210, an image processing unit 220, an OSD generator 240, a mixer 245, a Frame Rate Converter (FRC) 250, and/or a formatter 260. The controller 170 may further include an audio processing unit 230 and a data processing unit.

The demultiplexer 210 may demultiplex an input TS signal. For example, if an MPEG-2 TS signal is input, the demultiplexer 210 may demultiplex the MPEG-2 TS signal into image, audio and data signals. The TS signal input to the demultiplexer 210 may be a TS signal output from the tuner 110, the demodulator 120 and/or the external device interface unit 130.

The image processing unit 220 may perform image processing upon the demultiplexed image signal. The image processing unit 220 may include an image decoder 225 and a scaler 235.

The image decoder 225 may decode the demultiplexed image signal and the scaler 235 may adjust a resolution of the decoded image signal such that the image signal can be output through the display 180.

The image decoder 225 may include various types of decoders. For example, the image decoder 225 may include at least one of an MPEG-2 decoder, an H.264 decoder, an MPEG-C decoder (MPEG-C part 3), an MVC decoder, and an FTV decoder.

The image signal decoded by the image processing unit 220 may include a 2D image signal alone, a mixture of a 2D image signal and a 3D image signal, and/or a 3D image signal alone.

For example, an external image signal received from the image capture unit 190 or a broadcast image signal of a broadcast signal received through the tuner 110 may include a 2D image signal alone, a mixture of a 2D image signal and a 3D image signal, and/or a 3D image signal alone. Accordingly, the controller 170, and more specifically the image processing unit 220 in the controller 170, may perform signal processing upon the external image signal or the broadcast image signal to output a 2D image signal alone, a mixture of a 2D image signal and a 3D image signal, and/or a 3D image signal alone.

The image signal decoded by the image processing unit 220 may include a 3D image signal in various formats. For example, the decoded image signal may be a 3D image signal that includes a color difference image and a depth image, and/or a 3D image signal that includes multi-view image signals. The multi-view image signals may include a left-eye image signal and a right-eye image signal, for example.

As shown in FIG. 3, a format of the 3D image signal may include a side-by-side format (FIG. 3(a)) in which the left-eye image L and the right-eye image R are arranged in a horizontal direction, a top/down format (FIG. 3(b)) in which the left-eye image and the right-eye image are arranged in a vertical direction, a frame sequential format (FIG. 3(c)) in which the left-eye image and the right-eye image are arranged in a time division manner, an interlaced format (FIG. 3(d)) in which the left-eye image and the right-eye image are mixed in lines (i.e., interlaced), and/or a checker box format (FIG. 3(e)) in which the left-eye image and the right-eye image are mixed in boxes (i.e., box-interlaced).

The OSD generator 240 may generate an OSD signal based on a user input signal or automatically. For example, the OSD generator 240 may generate a signal for displaying a variety of information as graphics and/or text on a screen of the display 180 based on a user input signal. The generated OSD signal may include a variety of data such as a user interface screen, various menu screens, a widget and/or an icon of the image display apparatus 100. The generated OSD signal may include a 2D object and/or a 3D object.

The mixer 245 may mix the OSD signal generated by the OSD generator 240 with the image signal decoded by the image processing unit 220. Each of the OSD signal and the decoded image signal may include at least one of a 2D signal and a 3D signal. The mixed image signal may be provided to the frame rate converter 250.

The frame rate converter 250 may convert the frame rate of the input image. For example, a frame rate of 60Hz may be converted to 120Hz or 240Hz. In an example where the frame rate of 60Hz is converted to 120Hz, the frame rate converter 250 may insert a first frame between the first frame and a second frame, or the frame converter 250 may insert a third frame estimated from the first frame and the second frame between the first frame and the second frame. In an example where the frame rate of 60Hz is converted into 240Hz, the frame rate converter 250 may insert the same three frames or three estimated frames between the frames.

The frame rate converter 250 may also directly output an input image signal without frame rate conversion. When a 2D image signal is input to the frame rate converter 250, the frame rate converter 250 may directly output the 2D image signal without frame rate conversion. On the other hand, when a 3D image signal is input, the frame rate converter 250 may convert the frame rate of the 3D image signal as described above.

The formatter 260 may receive the mixed signal (i.e., a mixture of the OSD signal and the decoded image signal) from the mixer 245 and may separate the mixed signal into a 2D image signal and a 3D image signal.

The 3D image signal may include a 3D object. Examples of such an object may include a Picture In Picture (PIP) image (still image or moving image), an EPG indicating broadcast program information, various menus, a widget, an icon, text, or an object, a person or a background present in an image, a web page (newspaper, magazine, or the like), etc. Other types of objects may also be provided.

The formatter 260 may change a format of the 3D image signal to any of the various formats shown in FIG. 3, for example. Accordingly, an operation of the glasses-type 3D viewing device may be performed based on the format.

FIG. 4(a) shows the operation of the 3D glasses 195 (e.g. shutter glasses) when the formatter 260 arranges and outputs the 3D image signal in the frame sequential format from among the formats shown in FIG. 3.

More specifically, a left portion of FIG. 4(a) shows an example where the left-eye glass of the shutter glasses 195 may be opened and the right-eye glass of the shutter glasses may be closed when the left-eye image L is displayed on the display 180, and a right portion of FIG. 4(a) shows an example where the left-eye glass of the shutter glasses 195 may be closed and the right-eye glass of the shutter glasses may be opened when the right-eye image R is displayed on the display 180.

FIG. 4(b) shows the operation of the 3D glasses 195 (e.g. polarized glasses) when the formatter 260 arranges and outputs the 3D image signal in the side-by-side format from among the formats shown in FIG. 3. The 3D glasses 195 used in the example of FIG. 4(b) may be shutter glasses. In this example, the shutter glasses may keep the left and right-eye glasses opened and may thus operate as polarized glasses.

The formatter 260 may switch a 2D image signal to a 3D image signal. For example, based on a 3D image generation algorithm, the formatter 260 may detect an edge or a selectable object from a 2D image signal and may then separate an object based on the detected edge or selectable object to generate a 3D image signal. The formatter 260 may then separate and arrange the generated 3D image signal into a left-eye image signal L and a right-eye image signal R as described above.

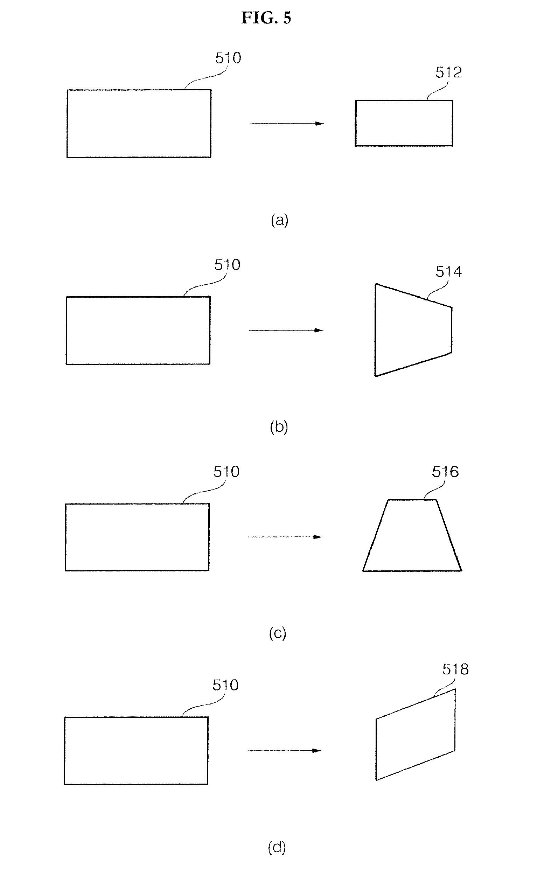

Although not shown, the controller 170 may further include a 3D processor, downstream of the formatter 260, for 3-dimensional (3D) effects signal processing. The 3D processor may perform signal processing for brightness, tint, and color adjustment of an image signal in order to increase 3D effects. For example, the 3D processor may perform signal processing for making a near image portion clear and making a distant image portion unclear. Functions of the 3D processor may be incorporated into the formatter 260 or the image processing unit 220, as described below with reference to FIG. 5.

The audio processing unit 230 in the controller 170 may perform audio processing upon the demultiplexed audio signal. The audio processing unit 230 may include decoders.

For example, when the demultiplexed audio signal is a coded audio signal, the audio processing unit 230 may decode the coded audio signal. More specifically, when the demultiplexed audio signal is an audio signal encoded based on the MPEG-2 standard, the audio processing unit 230 may decode the audio signal using an MPEG-2 decoder. When the demultiplexed audio signal is an audio signal coded based on the MPEG 4 Bit Sliced Arithmetic Coding (BSAC) standard according to a terrestrial DMB scheme, the audio processing unit 230 may decode the audio signal using an MPEG 4 decoder. When the demultiplexed audio signal is an audio signal coded based on the MPEG-2 Advanced Audio Codec (AAC) standard according to the satellite DMB or DVB-H scheme, the audio processing unit 230 may decode the audio signal using an AAC decoder. When the demultiplexed audio signal is an audio signal coded based on the Dolby AC-3 standard, the audio processing unit 230 may decode the audio signal using an AC-3 decoder.

The audio processing unit 230 in the controller 170 may perform base and treble adjustment (equalization), volume adjustment, and/or the like.

The data processing unit in the controller 170 may perform data processing upon the demultiplexed data signal. For example, if the demultiplexed data signal is a coded data signal, the data processing unit may decode the coded data signal. The coded data signal may be EPG information including broadcast information such as a start time and an end time of a broadcast program broadcast through each channel. For example, the EPG information may include ATSC-Program and System Information Protocol (ATSC-PSIP) information in the ATSC system and may include DVB-Service Information (DVB-SI) in the DVB system. The ATSC-PSIP information and the DVB-SI may be included in a (4-byte) header of the above-described TS (i.e., the MPEG-2 TS).

Although FIG. 2 shows that the signals from the OSD generator 240 and the image processing unit 220 are mixed by the mixer 245 and are then subjected to 3D processing by the formatter 260, embodiments are not limited to the FIG. 2 example, and the mixer 245 may be located downstream of the formatter 260. That is, the formatter 260 may perform 3D processing upon an output of the image processing unit 220 to generate a 3D signal, and the OSD generator 240 may generate an OSD signal and perform 3D processing upon the OSD signal to generate a 3D signal, and the mixer 245 may then mix the 3D signals.

The controller 170 (in FIG. 2) is an embodiment. Some of the components of the controller 170 may be combined or omitted and/or other components may be added thereto based on the type of the controller 170 that is actually implemented.

In particular, the frame rate converter 250 and the formatter 260 may be individually provided outside the controller 170.

FIG. 5 illustrates scaling schemes of a 3D image signal according to an embodiment.

As shown in FIG. 5, the controller 170 may perform 3D effects signal processing on the 3D image signal to increase 3D effects. More specifically, the controller 170 may perform signal processing for adjusting a size or a slope of a 3D object in the 3D image.

The controller 170 may enlarge or reduce a 3D image signal or a 3D object 510 in the 3D image signal by a specific ratio as shown in FIG. 5(a), where the reduced 3D object is denoted by "512". The controller 170 may partially enlarge or reduce the 3D object 510 into trapezoidal forms 514 and 516 as shown in FIGs. 5(b) and 5(c). The controller 170 may also rotate at least part of the 3D object 510 into a parallelogram form 518 as shown in FIG. 5(d). The stereoscopic effect (i.e., 3D effect) of the 3D image or the 3D object in the 3D image may be more emphasized through such scaling (i.e., size adjustment) or slope adjustment.

The difference between both parallel sides of the parallelogram form 514 or 516 may increase as the slope increases as shown in FIG. 5(b) or 5(c), and/or the rotation angle may increase as the slope increases as shown in FIG. 5(d).

The size adjustment or slope adjustment may be performed after the formatter 260 arranges the 3D image signal in a specific format. The size adjustment or slope adjustment may be performed by the scaler 235 in the image processing unit 220. The OSD generator 240 may generate an OSD object into any of the forms shown in FIG. 5 to emphasize 3D effects.

Signal processing such as brightness, tint, and/or color adjustment, in addition to size or slope adjustment shown in FIG. 5, may be performed on an image signal or object to increase 3D effects. For example, signal processing may be performed for making a near portion clear and making a distant portion unclear. Such 3D effects signal processing may be performed in the controller 170 or in a separate 3D processor. When the 3D effects signal processing is performed in the controller 170, the 3D effects signal processing may be performed, together with size or slope adjustment, in the formatter 260 and/or may be performed in the image processing unit 220.

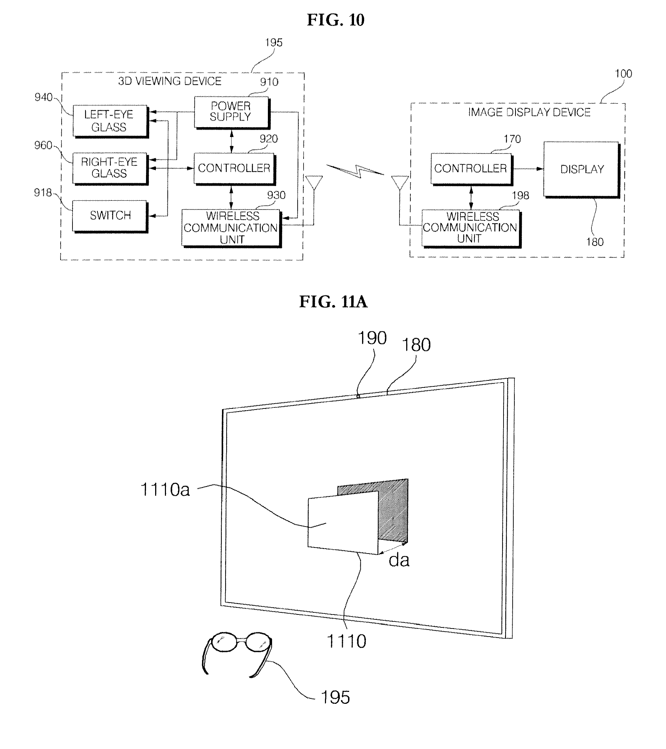

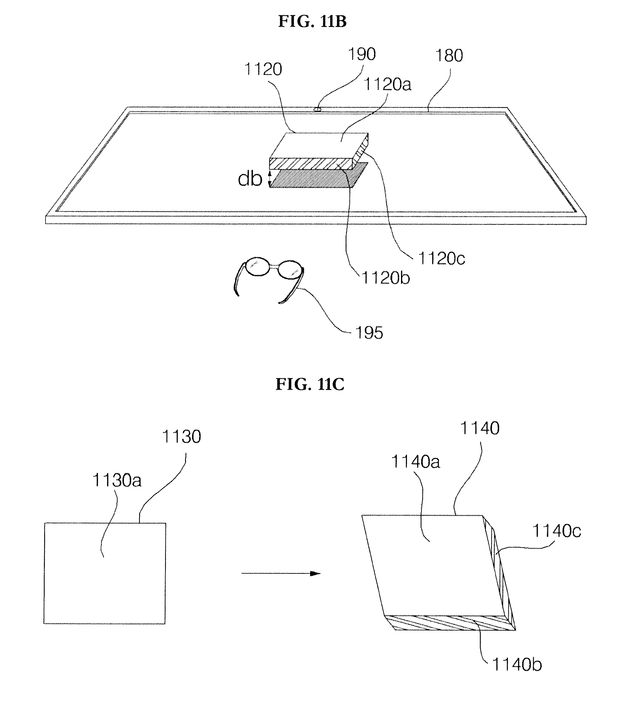

According to an embodiment, signal processing for changing at least one of brightness, contrast, and/or tint of a 3D image or a 3D object of the 3D image and/or adjusting the size or the slope of an object in the 3D image may be performed when an arrangement of the display 180 (of the image display apparatus 100) is switched from an upright configuration to a substantially horizontal configuration (substantially parallel to the ground). This may improve stereoscopic effects of the 3D image or the 3D object, compared to when the display 180 is arranged perpendicular to the ground, as described below with reference to FIG. 11.

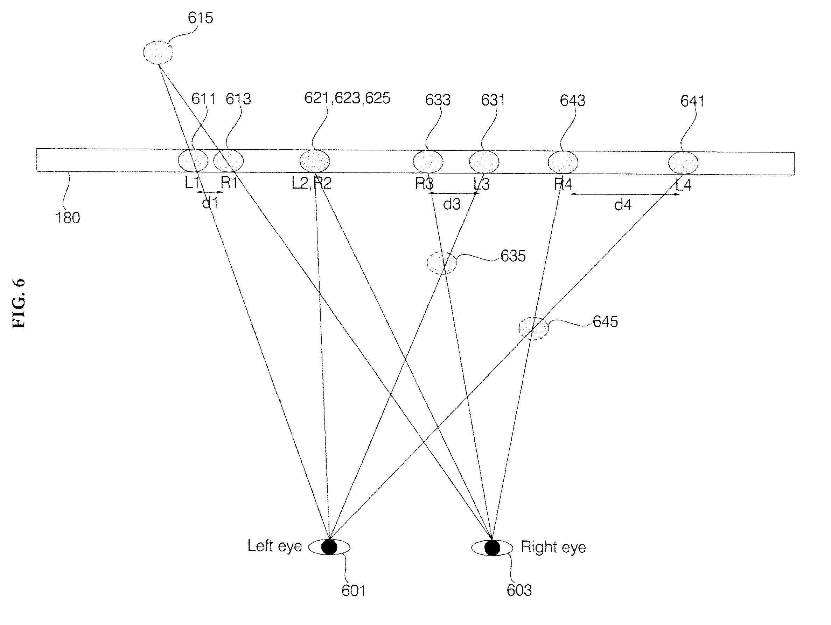

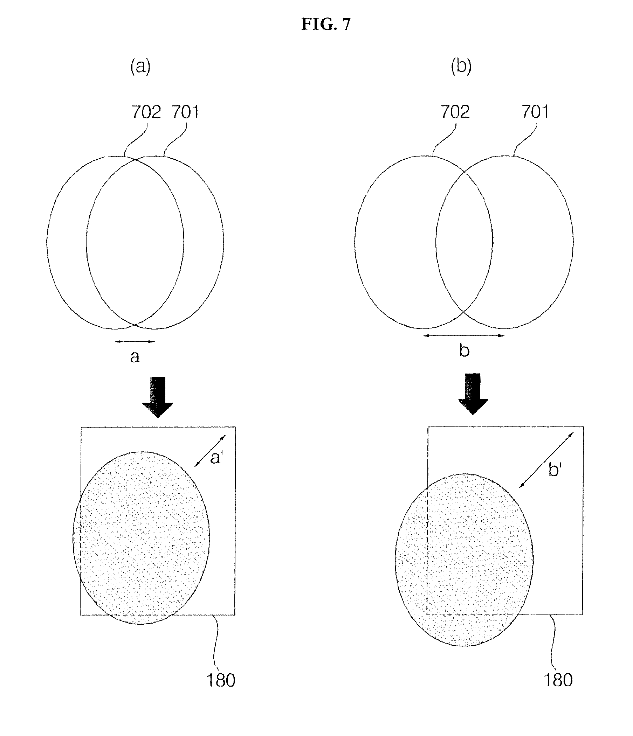

FIG. 6 illustrates image formation by a left-eye image and a right-eye image. FIG. 7 illustrates a perceived depth of a 3D image based on a distance between a left-eye image and a right-eye image.

A plurality of images or a plurality of objects 615, 625, 635 and 645 may be shown in FIG. 6.

The first object 615 may include a first left-eye image 611 (L) based on a first left-eye image signal and a first right-eye image 613 (R) based on a first right-eye image signal. A distance between the first right-eye image 613 and the first left-eye image 611 on the display 180 is d1. The user may perceive that an image is formed at an intersection of a line connecting the left eye 601 and the first left-eye image 611 and a line connecting the right eye 603 and the first right-eye image 613. Accordingly, the user may perceive that the first object 615 is located behind the display 180.

The second object 625 may include a second left-eye image 621 (L) and a second right-eye image 623 (R). Since the second left-eye image 621 and the second right-eye image 623 are displayed so as to overlap each other on the display 180, a distance between the second left-eye image 621 and the second right-eye image 623 is 0. Accordingly, the user may perceive that the second object 625 is located on the display 180.

The third object 635 may include a third left-eye image 631 (L) and a third right-eye image 633 (R), and the fourth object 645 may include a fourth left-eye image 641 (L) and a fourth right-eye image 643 (R). The distance between the third left-eye image 631 and the third right-eye image 633 is d3, and the distance between the fourth left-eye image 641 and the fourth right-eye image 643 is d4.

According to the above-described method, the user may perceive that the third object 635 and the fourth object 645 are located at image formation locations, and thus may be located in front of the display 180, as shown in FIG. 6.

The user may perceive that the fourth object 645 is located in front of the third object 635 (i.e., protrudes from the third object 635) since the distance d4 between the fourth left-eye image 641 (L) and the fourth right-eye image 643 (R) is greater than the distance d3 between the third left-eye image 631 (L) and the third right-eye image 633 (R).

The perceived distance (or apparent distance) between the display 180 and each of the objects 615, 625, 635 and 645, which is perceived by the user, may be referred to as a "depth" or a "perceived depth." The perceived depth of the object that appears to the user to be located behind the display 180 may have a negative value (-), and the perceived depth of the object that appears to the user to be located in front of the display 180 may have a positive value (+). That is, the perceived depth may increase as a degree increases of protrusion of the object from the display 180 toward the user.

As may be seen from FIG. 7, when the distance a between a left-eye image 701 and a right-eye image 702 shown in FIG. 7(a) is less than the distance b between a left-eye image 701 and a right-eye image 702 shown in FIG. 7(b), the perceived depth a' of the 3D object of FIG. 7(a) is less than the perceived depth b' of the 3D object of FIG. 7(b).

When the 3D image includes a left-eye image and a right-eye image, a position at which the image is formed as perceived by the user may change based on the distance between the left-eye image and the right-eye image. Accordingly, by adjusting the displayed distance between the left-eye image and the right-eye image, the perceived depth of the 3D image or the 3D object including the left-eye image and the right-eye image may be adjusted.

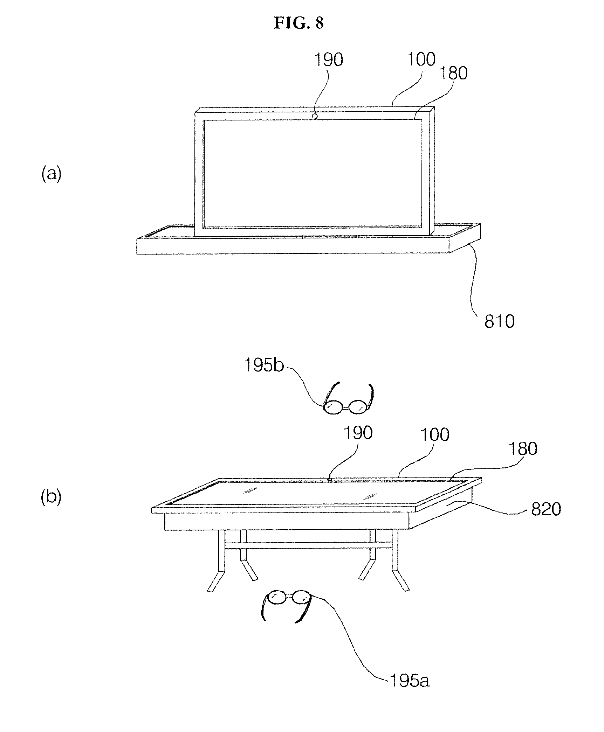

FIG. 8 illustrates an exemplary arrangement of a display of the image display apparatus of FIG. 1.

FIG. 8(a) illustrates that the display 180 (of the image display apparatus 100) may arranged perpendicular to the ground. The image display apparatus 100 may be arranged on a support 810 for a vertical arrangement.

The support 810 may be a set-top box that may include at least one of the tuner 110, the demodulator 120, the external device interface unit 130, the network interface unit 135, the memory 140, the user input interface unit 150, the sensor unit 160, the controller 170, the display 180, the audio output unit 185, and/or a power supply.

Signal processing of an input image may be performed by the image display apparatus 100 and may also be performed by the support 810 that is a set-top box. The support 810 and the image display apparatus 100 may perform wired communication with each other.

FIG. 8(b) illustrates that the display 180 (of the image display apparatus 100) is arranged substantially parallel to the ground (i.e., arranged substantially horizontally). The image display apparatus 100 may be arranged on a support 820 for a substantially horizontal arrangement. The image display apparatus 100 may also be provided on a table, a desk, a flat piece of furniture, and/or a floor rather than on the support 820. As used hereinafter, a horizontal arrangement may be considered a substantially horizontal arrangement, and/or parallel to a surface such as ground may be considered as substantially parallel to the surface.

When the display 180 (of the image display apparatus 100) is arranged parallel to the ground as shown in FIG. 8(b), signal processing of an input image may be performed by the image display apparatus 100 and may also be performed by the support 810, which may be a set-top box described above with reference to FIG. 8(a). In this example, the support 810 and the image display apparatus 100 may perform wireless communication with each other.

When the display 180 (of the image display apparatus 100) is arranged parallel to the ground as shown in FIG. 8(b), the user may view a 3D image displayed on the display 180 using 3D viewing devices 195a and 195b.

The term "horizontal" may refer to a direction parallel to the ground without a slope. That is, the horizontal direction may be a direction perpendicular to the direction of gravity. The display 180 may not be exactly perpendicular to the direction of gravity depending on horizontality of the floor or the support 320. The state in which the display 180 is arranged horizontally may include not only the state in which the display 180 is arranged exactly horizontally but also the state in which the screen of the display 180 is exposed upward (i.e., in a direction opposite to the direction toward the ground). The term "horizontal direction" may refer not only to a direction at an angle of exact 90 degrees with respect to the direction of gravity, but also to a direction at an angle 90 degrees with respect to the direction of gravity with a certain margin of errors depending on the horizontality of the floor or the support 320.

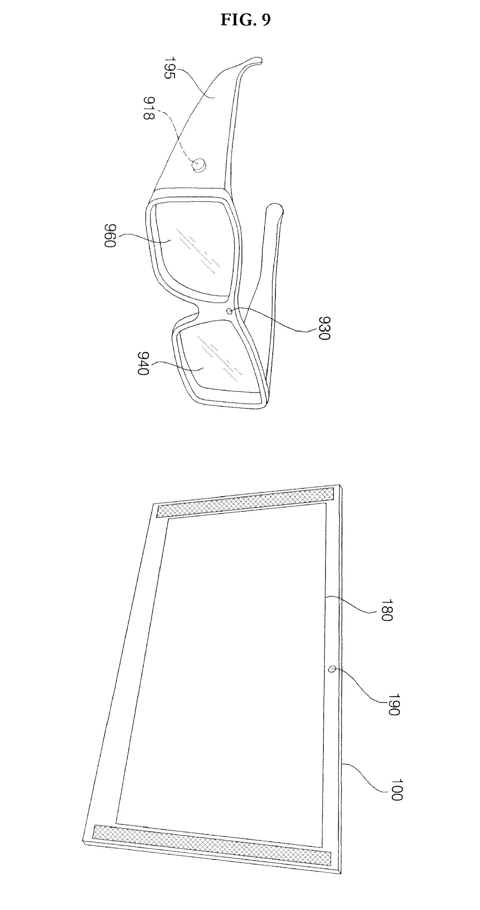

FIG. 9 illustrates a 3D viewing device and an image display apparatus according to an embodiment. FIG. 10 is a block diagram of the 3D viewing device and the image display apparatus of FIG. 9.

As shown in FIGs. 9 and 10, the 3D viewing device 195 may include a power supply 910, a switch 918, a controller 920, a wireless communication unit 930, a left-eye glass 940, and a right-eye glass 960, for example.

The power supply 910 may supply power to the left-eye glass 940 and the right-eye glass 950. A drive voltage VthL may be applied to the left-eye glass 940 and a drive voltage VthR may be applied to the right-eye glass 960. Each of the left-eye glass 940 and the right-eye glass 960 may be opened based on the applied drive voltage.

The drive voltages VthL and VthR may be alternately provided in different periods and the drive voltages VthL and VthR may have different levels so that polarization directions of the left-eye glasses 940 and the right-eye glasses 950 are different.

The power supply 910 may supply operational power to the controller 920 and the wireless communication unit 930 in the 3D viewing device 195.

The switch 918 may be used to turn on or to turn off the 3D viewing device 195. More specifically, the switch 918 may be used to turn on or to turn off the operational power of the 3D viewing device 195. That is, when the switch 918 is turned on, the power supply 910 may be activated to supply the operational power to the controller 920, the wireless communication unit 930, the left-eye glass 940, and the right-eye glass 960.

The controller 920 may control the left-eye glass 940 and the right-eye glass 960 in the 3D viewing device 195 to be opened or closed in synchronization with a left-eye image frame and a right-eye image frame displayed on the display 180 (of the image display apparatus 100). The controller 920 may open or close the left-eye glass 940 and the right-eye glass 960 in synchronization with a synchronization signal Sync received from the wireless communication unit 198 (in the image display apparatus 100).

The controller 920 may control the operation of the power supply 910 and the wireless communication unit 930. When the switch 918 is turned on, the controller 920 may control the power supply 910 to be activated to supply power to each component.

The controller 920 may control the wireless communication unit 930 to transmit a pairing signal to the image display apparatus 100 to perform pairing with the image display apparatus 100. The controller 920 may also receive a pairing signal from the image display apparatus 100.

The wireless communication unit 930 may transmit or receive data to or from the wireless communication unit 198 (of the image display apparatus 100) using an Infrared (IR) scheme or a Radio Frequency (RF) scheme. More specifically, the wireless communication unit 930 may receive a synchronization signal Sync for opening or closing the left-eye glass 940 and the right-eye glass 960 from the wireless communication unit 198. Opening and closing operations of the left-eye glass 940 and the right-eye glass 960 may be controlled based on the synchronization signal Sync.

The wireless communication unit 930 may transmit or receive a pairing signal to or from the image display apparatus 100. The wireless communication unit 930 may also transmit a signal to the image display apparatus 100 indicating whether or not the 3D viewing device 195 is being used.

The left-eye glass 940 and the right-eye glass 960 may be active-type left-eye and right-eye glasses that are polarized based on an applied electrical signal. The left-eye glass 940 and the right-eye glass 960 may change their polarization directions based on an applied voltage.

For example, the left-eye glass 940 and the right-eye glass 960 may be alternately opened based on a synchronization signal Sync from the image display apparatus 100. The 3D viewing device 195 may be shutter glasses.

The image display apparatus 100 may include the wireless communication unit 198, the controller 170, and the display 180, as described above with respect to FIGs. 1 and 2. The following description may be provided focusing on operation of the 3D viewing device 195.

When the 3D viewing device 195 is detected, the wireless communication unit 198 may transmit a synchronization signal to the 3D viewing device 195. For example, the wireless communication unit 198 may transmit a synchronization signal allowing the left-eye glass 940 and the right-eye glass 960 of the 3D viewing device 195 to be opened in synchronization with a left-eye image frame and a right-eye image frame that are sequentially displayed on the display 180.

The controller 170 may control the wireless communication unit 198 to output a corresponding synchronization signal according to a left-eye image frame and a right-eye image frame that are sequentially displayed on the display 180. The controller 170 may control the wireless communication unit 198 to transmit or receive a pairing signal to perform pairing with the 3D viewing device 195.

FIGs. 11A to 13B are drawings to explain examples of a method for operating an image display apparatus.

The controller 170 may determine whether or not the display 180 is arranged substantially parallel to the ground (FIG. 8(b)) using the sensor unit 160 or the memory 140. For example, the determination of whether or not the display 180 is arranged parallel to the ground may be detected using a gyro sensor in the sensor unit 160, and the detection signal may then be input to the controller 170.

When a 3D image is displayed, the controller 170 may perform 3D effects signal processing on the 3D image when the display 180 is arranged substantially parallel to the ground.

The 3D effects signal processing may be signal processing for changing at least one of sharpness, brightness, contrast, and/or tint of a 3D image, or the 3D effects signal processing may be signal processing for adjusting a size or a slope of an object in the 3D image.

The 3D effects signal processing may be deactivated when the display 180 (of the image display apparatus 100) is arranged substantially parallel to the ground and may then be performed when the display 180 is arranged perpendicular to the ground. When the display 180 is arranged vertically, more 3D effects signal processing may be performed than when the display 180 is arranged horizontally.

FIG. 11A illustrates that a 3D object 1110 is displayed when the display 180 is arranged perpendicular to the ground. When the user wears the 3D viewing device 195, the user may view the 3D object 1110 such that the 3D object 1110 having a specific depth da (and more particularly a first surface 1110a of the 3D object 1110) protrudes.

FIG. 11B illustrates that a 3D object 1120 is displayed when the display 180 is arranged substantially parallel to the ground. When the user wears the 3D viewing device 195, the user may view the 3D object 1120 as a protruding 3D object having a specific depth db. The user may view the 3D object 1120 such that not only a first surface 1120a but also both a second surface 1120b and a third surface 1120c of the 3D object 1120 protrude.

When the display 180 is arranged substantially parallel to the ground, there may be no graphics surrounding the 3D object 1120 and thus the 3D object 1120 may be displayed, providing a live stereoscopic effect, such that the 3D object 1120 appears to stand within a real space in which the user is located, similar to a hologram.

FIG. 11C illustrates 3D effects signal processing.

When the display 180 (of the image display apparatus 100) is arranged perpendicular to the ground, the controller 170 may assign an object 1130a depth da caused by a binocular disparity between left-eye and right-eye images. Accordingly, the 3D object 1110 may appear to protrude as shown in FIG. 11A. 3D effects signal processing may be omitted or may be slightly performed. Thus, scaling or slope adjustment, described above with respect to FIG. 5, may not be performed on a first region 1130a of the object 1130.

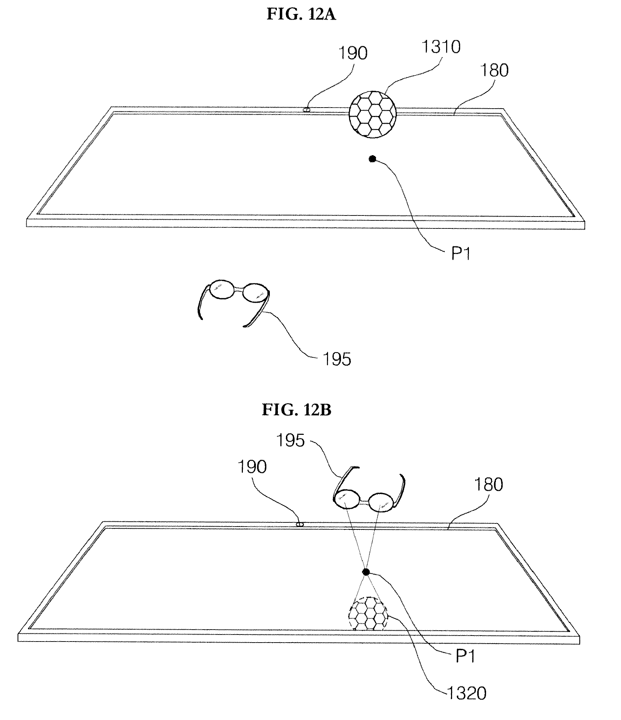

On the other hand, when the display 180 is arranged substantially parallel to the ground, the controller 170 may assign an object 1140a depth db caused by a binocular disparity between left-eye and right-eye images. Accordingly, the 3D object 1120 may appear to protrude as shown in FIG. 12B. Additionally, 3D effects signal processing may be performed. More 3D effects signal processing may be performed than when the display 180 is arranged vertically.

Processing may be performed to partially rotate a first region 1140a of the object 1140 such that the form of the object 1140 is changed from a rectangular form to a parallelogram form, as described above with respect to FIG. 5. Additionally, a second region 1140b and a third region 1140c may be added to edges of the first region 1140a to provide 3D effects. The second region 1140b and the third region 1140c may be newly generated based on edges of the first region 1140a.

The 3D effects signal processing may be performed by decoding an image of a new view and adding the decoded image to the original image. For example, when an input image signal is a multi-view image encoded according to multi-view video coding (MVC) or the like, an image of a view corresponding to the second region 1140b shown in FIG. 11C and an image of a view corresponding to the third region 1140c included in the multi-view image may be decoded, and the decoded images of the views may then be added to the image (i.e., left-eye and right-eye images) of the view corresponding to the first region 1140a of FIG. 11C.

Accordingly, the stereoscopic effect (i.e., 3D effect) of the 3D object may be increased when the display 180 is arranged perpendicular to the ground, as compared to when the display 180 is arranged substantially parallel to the ground.

The sensor unit 160 or the image capture unit 190 may detect the position of the 3D viewing device 195 for 3D image viewing. For example, the user or the 3D viewing device 195 may be detected using a position sensor in the sensor unit 160.

The position of the 3D viewing device 195 may also be detected using the wireless communication unit 198 (of the image display apparatus 100), which may communicate with the wireless communication unit 930 (of the 3D viewing device 195).

FIG. 12A illustrates that a 3D object may be displayed when the display 180 is arranged substantially parallel to the ground. More specifically, when the user wears the 3D viewing device 195 at a position near the lower portion of the display 180 on which the image capture unit 190 is not provided, the 3D object 1310 may appear to protrude (or to be positioned) at a certain distance above a point P1 on the display 180.

FIG. 12B illustrates that a 3D object may be displayed when the display 180 is arranged substantially parallel to the ground. More specifically, when the user wears the 3D viewing device 195 at a position near the upper portion of the display 180 on which the image capture unit 190 is provided, the 3D object 1310 may appear to be sunken (or to be positioned) below the point P1 on the display 180.

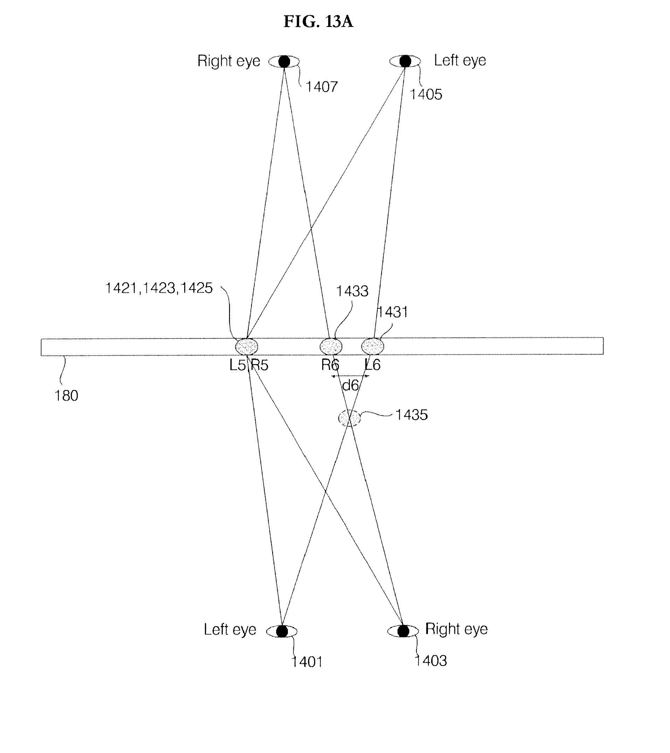

FIG. 13A illustrates how an image of a 3D object is formed depending on a position of each user (i.e., the position of the 3D viewing device 195).

In FIG. 13A, it is assumed that a first user (i.e., a first viewing device) may be located near the lower portion of the display 180 on which the image capture unit 190 is not provided (as shown in FIG. 12A) and that a second user (i.e., a second viewing device) may be located near the upper portion of the display 180 on which the image capture unit 190 is provided (as shown in FIG. 12B).

In the example of FIG. 13A, a first object 1425 may include a first left-eye image 1421 (L) and a first right-eye image 1423(R) that are displayed at an interval of 0 in an overlapping manner on the display 180. Accordingly, the first and second users may perceive that the first object 1425 is located on the display 180.

A second object 1435 may include a second left-eye image 1431 (L) and a second right-eye image 1433(R) that are displayed at an interval of d6.

The first user may perceive that an image is formed at an intersection between a line connecting a left eye 1401 and the second left-eye image 1431 and a line connecting a right eye 1403 and the second right-eye image 1433. Thus, the first user may perceive the second object 1435 as being located in front of the display 180 such that the second object 1435 appears to protrude from the display 180.

On the other hand, the second user may perceive that an image is formed at an intersection between a line connecting a left eye 1405 and the second left-eye image 1431 and a line connecting a right eye 1407 and the second right-eye image 1433. Thus, the second user may perceive the second object 1435 as being located below the display 180 such that the second object 1435 appears to be sunken below the display 180.

That is, when the first viewing device and the second viewing device are located at opposite sides of the display 180 that is arranged parallel to the ground, a user wearing one of the first and second viewing devices may perceive a 3D image or a 3D object displayed on the display 180 as a protruding 3D image, and a user wearing the other viewing device may perceive the 3D image or the 3D object as being sunken.

An embodiment may suggest that a left-eye glass and a right-eye glass of one of the plurality of viewing devices may be switched.

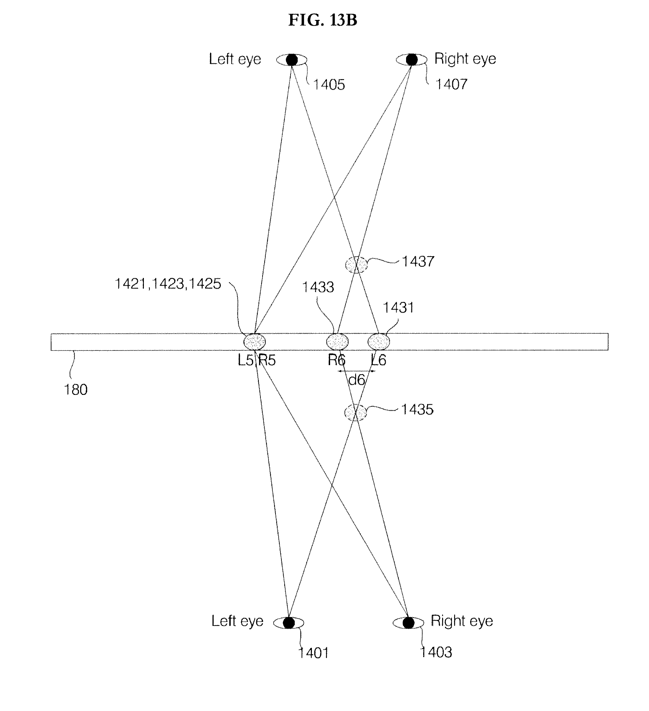

FIG. 13B illustrates how an image of a 3D object is formed depending on a position of each user (i.e., the position of the 3D viewing device 195).

The difference of FIG. 13B from FIG. 13A is that the left and right eyes of the second user may be switched. More specifically, the left-eye glass and the right-eye glass of the 3D viewing device worn by the second user, rather than the left and right eyes of the second user, may be switched.

As can be seen from FIG. 13B, both the first and second users may perceive the first object 1425 to be located on the display 180, as in the example of FIG. 13A.

Additionally, the first user may perceive that an image is formed at an intersection between a line connecting the left eye 1401 and the second left-eye image 1431 and a line connecting the right eye 1403 and the second right-eye image 1433. Thus, the first user may perceive the second object 1435 as being located in front of the display 180 such that the second object 1435 appears to protrude from the display 180.

On the other hand, the second user may perceive that an image is formed at an intersection between a line connecting the left eye 1405 and the second left-eye image 1431 and a line connecting the right eye 1407 and the second right-eye image 1433. The second user may perceive the second object 1435 as being located in front of the display 180 such that the second object 1435 appears to protrude from the display 180 since the left eye 1405 and the right eye 1407 of the second user have been switched as compared to the example of FIG. 13A.

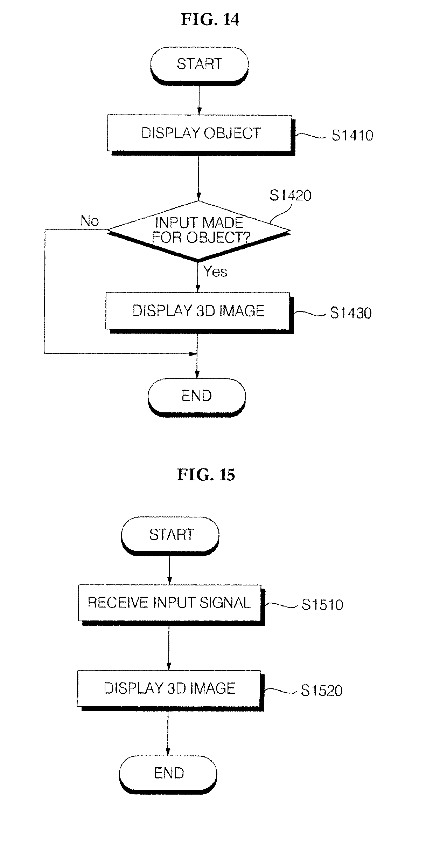

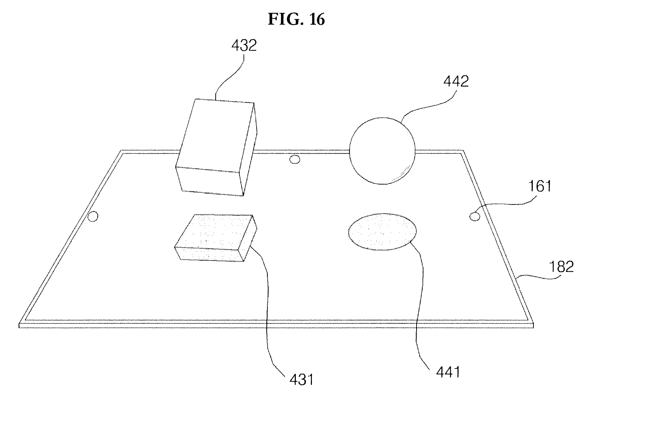

FIGs. 14 and 15 are flow charts of a method for operating an image display apparatus according to an embodiment. FIGs. 16 to 22 illustrate examples of the method for operating an image display apparatus according to the embodiment. Other embodiments and configurations may also be provided.

A method for operating the image display apparatus according to an embodiment may include displaying an image (including at least one object) on a display that is arranged substantially horizontally (S1410), receiving an input made for the object (S1420), and displaying a perceived 3D image based on the object (S1430).

A screen of the display may be exposed in a direction normal to the horizontal direction (i.e., may be exposed in a direction opposite to a direction toward the ground) as shown in FIG. 8(b).

At the image display operation S1410, objects may be displayed on the screen of the display, as described above with respect to FIGs. 11A to 11C.

While a 3D object may be displayed on a general-mount display 181 such that the 3D object appears to protrude toward the user (i.e., in the Z-axis direction) a 3D object may also be displayed on a display 182 that is arranged substantially horizontally such that the 3D object appears to protrude, relative to a 2D object, in a direction normal to the horizontal direction. That is, the perceived depth of the 3D object may be set such that the 3D object appears to protrude in a direction opposite to the direction toward the ground or appears to protrude in a direction different from the Z-axis direction.

In the method for operating the image display apparatus, a 3D image that appears to be sunken in the direction toward the ground or that appears to protrude in a direction opposite to the direction toward the ground may be displayed on the display at the 3D image display operation S1430. In this example, the display 180 may be arranged substantially horizontally.

The user may use content from the direction of a horizontal view angle different from the general view angle. In this example, there may be no background image around the 3D object and thus the 3D object provided a realistic stereoscopic effect such that the 3D object appears to stand on a floor within a real space in which the user is located, similar to a hologram.

The input may be a pointing signal that is received from a remote control device (or remote controller). The pointing signal may be received through the user input interface unit 150. A pointing device may be used as the remote control device.

The input made for the object may be a touch input or a gesture input.

As described above with respect to FIG. 1, the image capture unit 180 may be a touch screen, and the input may be a touch signal input on the touch screen. The touch signal may be input not only through touch by a hand of a user but also through a variety of input devices such as a stylus. The touch input may include an operation for touching and dragging from one point to another point.

The input may also be a gesture input. The image display apparatus may receive a gesture input and display an object corresponding to the received gesture input on the screen.

The controller 170 may identify a gesture input signal such as hand movement of a user using a motion sensor. The motion sensor may include a camera that detects a hand on the body of a user and captures movement of the hand. A separate display 190 may also be used.

The controller 170 may determine whether or not the hand movement of the user corresponds to a preset hand movement. When the hand movement of the user corresponds to a preset hand movement, the controller 170 may control the image display apparatus 100 based on a command corresponding to the preset hand movement.

In the example of an image display apparatus 100 having the display 182 that is arranged substantially horizontally, the user may more easily perform touch or gesture input since the display 182 is located at a low height near the user.

When the user makes an input (e.g. a touch input) on 2D objects 431 and 441, 3D objects 432 and 442 may be displayed, as shown in FIG. 16.

That is, when the user makes an input on an object, the object may be activated as a 3D object.

A plurality of users may conveniently make an input at their locations around the display 162 using the touch screen.

A sensor unit 161 or a camera (or an image capture unit) may detect the position or the motion of each user.

The method for operating the image display apparatus may further include detecting the position of the user, and the 3D image display operation S1130 may include displaying the 3D image differently based on the detected position of the user.

The 3D image may be displayed at a different position, depth, and/or slope depending on the detected position of the user. The 3D image may vary based on the state of each user (e.g. whether the user is standing or sitting on the floor) or a number of users.

The 3D object may be controlled through a process such as a signal sensing process through gesture or voice or direct signal input. Alternatively, the position of the user may be tracked using a sensor mounted on the image display apparatus and a 3D object may be displayed near the position of the user or at a position at which the user may easily view the 3D object.

For example, when a user places their hand at a position at which an object is displayed for more than a predetermined time, the image display apparatus may sense motion of the user or a position of the hand and determine that a user command to change the position of the object may be input. When the user performs an operation such as drag-and-drop, the image display apparatus may redetect the direction or the final position of the hand and move the object according to a corresponding gesture of the user.

The method for operating the image display apparatus may further include transmitting a drive signal, which varies according to position of the 3D viewing device, to the 3D viewing device when the display is of the supplementary display type.

The method for operating the image display apparatus may include receiving an input signal (S1510) and displaying a perceived 3D image, which appears to be sunken in a direction toward the ground or appears to protrude in a direction opposite to the direction toward the ground, based on the input signal (S1520). That is, a perceived 3D image, which appears to protrude in a direction normal to the horizontal direction, may be displayed based on a signal or data input to the image display apparatus to allow the user to use content from a new view point.

The method for operating the image display apparatus may further include arranging or providing the display in the horizontal direction.

The method for operating the image display apparatus may further include detecting the position of the user and the 3D image may be displayed differently according to the detected position of the user at the 3D image display operation S1520.

The image including at least one object may be a top-view image.

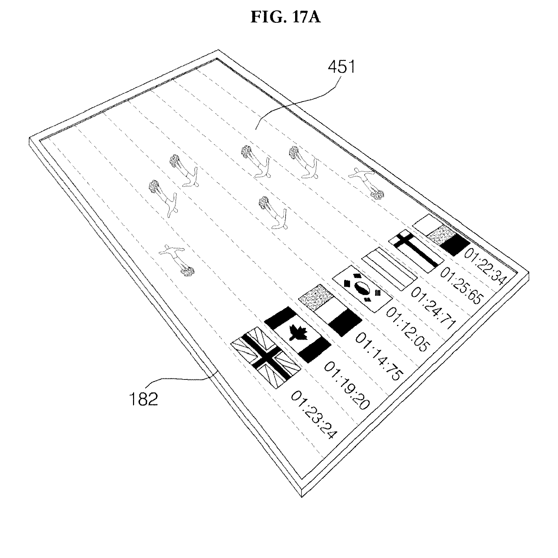

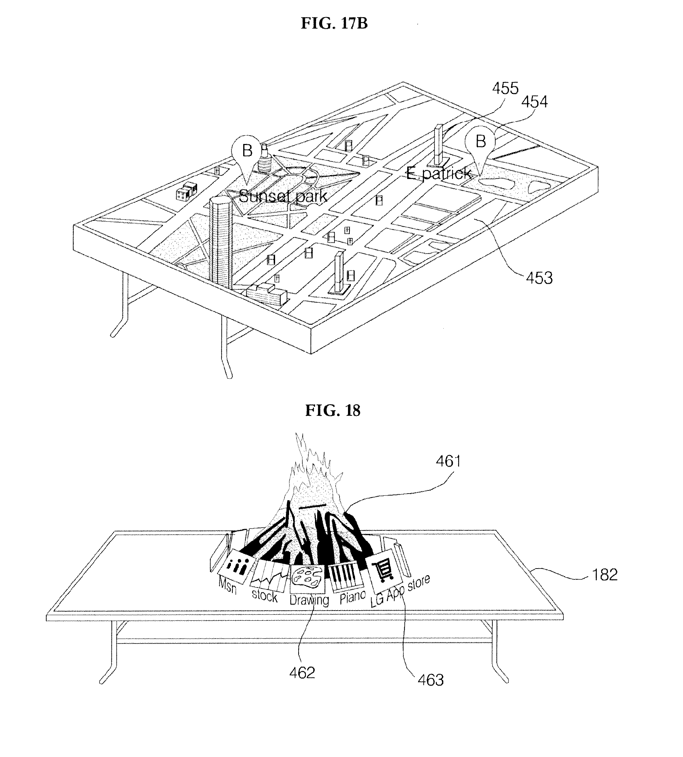

FIGs. 17A and 17B illustrate examples using a top-view image.

Examples of content, which may be more naturally used from the top-view point, may include various content such as a magazine, a photograph, a map, a newspaper, and a book that may be usually viewed on a table in the real world.

Accordingly, the display that is arranged horizontally may allow the user to use top-view content in a more natural way and to use such content from a new view point, and may also allow a plurality of users to enjoy content together, thereby building a strong relationship.

FIG. 17A illustrates an example in which the display 182 that is arranged substantially horizontally may display a top-view image 451, which is an image of swimming lanes viewed from the top. This may allow the user to view a sports game from a different view point (or perspective) from other image display apparatus. Users may also view other sports games, such as soccer or rugby, from the top-view point together with friends or family members while sitting around the display 182 as though they are in the audience.

Users may also place a beverage or a memo on the display 182 like a table.

In the example where content including images of multiple views (i.e., images captured from multiple angles) is provided, the content including one of the images of multiple views may be displayed.

FIG. 17B illustrates that the display 182 that is arranged substantially horizontally may display a map service. This may allow users to conveniently search map information, such as a local map or tourist attractions, while sitting without computers in their residences or in other accommodations. The image display apparatus may be connected to a mobile terminal or another type of external device through a network to allow users to more conveniently acquire or send map information.

The map service may be displayed as a 3D image or alternatively a map 453 may be displayed as a 2D image while a location 454 found by the user or a landmark 455 such as a famous building may be displayed as a perceived 3D image.

FIG. 18 illustrates an exemplary screen displayed on the display 182.

A graphics object 461, such as a campfire, may be displayed on the display 182 and 3D objects 462 and 463 corresponding to menu items may be displayed on other regions of the display. The 3D object 463 corresponding to a selected menu item may be displayed in a different color and size than other objects.

Additionally, the menu screen of FIG. 18 may serve as a standby screen and may be used for interior decoration and atmosphere creation even when content is not used on the display.

For example, the menu screen of FIG. 18 may allow users to talk around a campfire, thereby creating a warm atmosphere, and also to sing a song around the campfire while playing a guitar, thereby achieving higher efficiency when used in combination with music content.

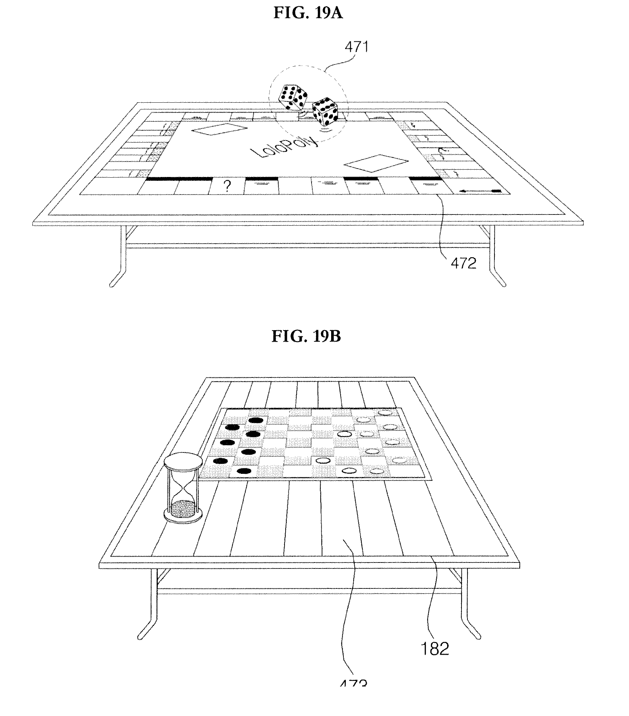

FIG. 19A illustrates an example in which board game content may be used, and FIG. 19B illustrates an example in which a game 473, such as chess or Chinese chess, may be used. In these examples, users may more conveniently and variously use a variety of content through a gesture or touch input on the display 182 that is arranged substantially horizontally.

As shown in FIG. 19A, a main image 472 may be displayed as a 2D image and a specific object (e.g. a pair of dice graphics objects 471) may be solely displayed as a 3D image, thereby increasing 3D effects and implementing a game use environment similar to a real board game.

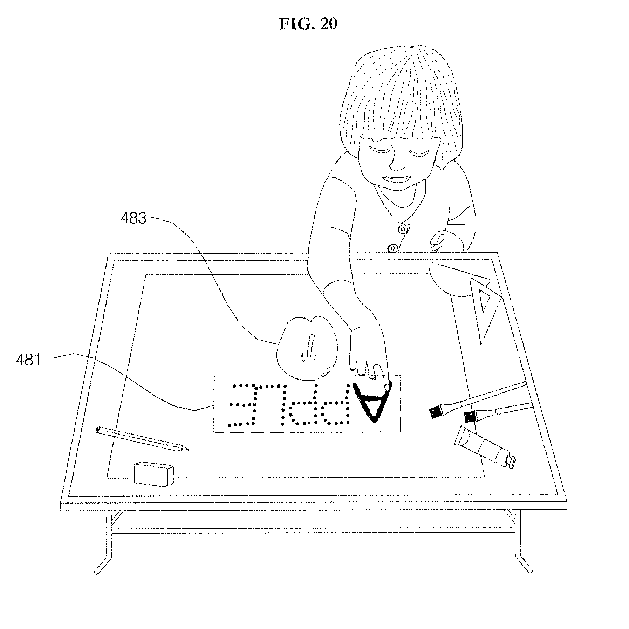

FIG. 20 illustrates that an output object 483 is displayed when an input is made on a corresponding input object 481 displayed on the display 182.

More specifically, a graphics object in the form of an apple may be displayed when a user inputs "apple" along a displayed input guide line shown as dotted lines in FIG. 20.

The output object 483 may be a 2D object or a 3D object.

The display 182 that is arranged horizontally may display an image of a view similar to that of a newspaper and can may display news articles containing moving image content to allow users to view video news that may not be viewed in a real newspaper.

Newspaper content may be divided into article objects and each article may be provided through a popup window that includes an enlarged article containing a larger font size so that the article may be easily read or each article may be provided together with audio.

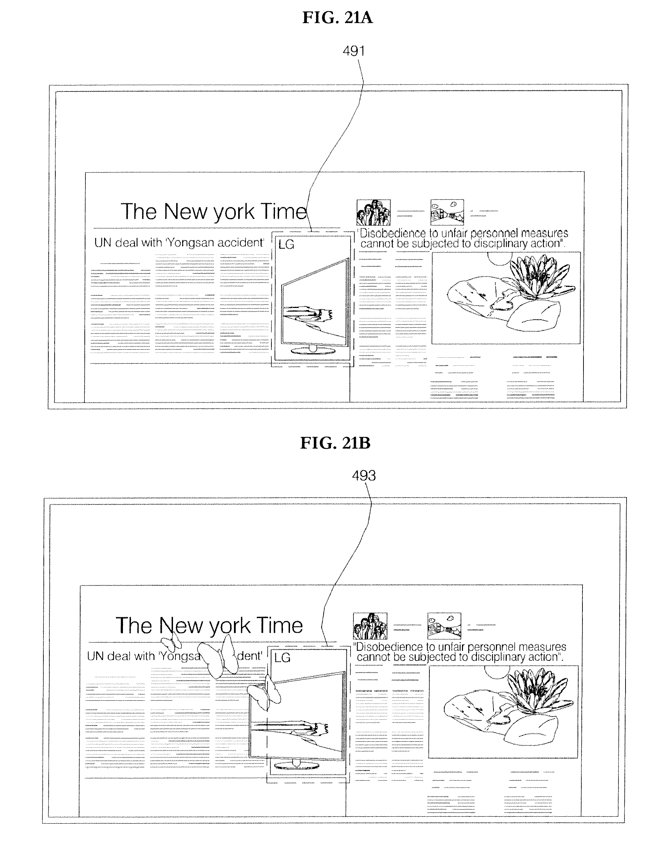

Additionally, when an input for selecting an object 491 displayed as a 2D image has been made as shown in FIG. 21A, the object may be activated so that an object 492 is displayed as a 3D image, as shown in FIG. 21B. The object may be an advertisement and a 3D advertisement may be exposed to create a new advertisement business model.

The method for operating the image display apparatus may further include connecting to an external device through a network, wherein the input signal may be a signal received from the external device. The external device may be a PC, another type of image display apparatus, a mobile terminal, and/or the like.

Information regarding data stored in the external device may be displayed at the 3D image display operation S1210. The method may further include receiving data from the external device.

For example, this embodiment may have an advantage in that it is possible to efficiently utilize content or data stored in or stored using the user's PC.

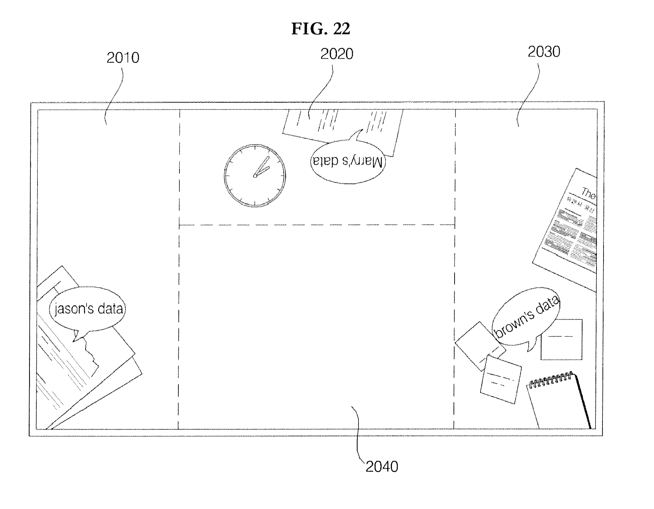

Referring to FIG. 22, the image display apparatus may be network-connected to a plurality of external devices and a screen of the image display apparatus may be divided into regions 2010, 2020, 2030, and 2040 such that data from different external devices may be displayed on the regions.

The display 182 that is arranged substantially horizontal may allow a plurality of users to share and edit data while directly viewing the data together, thereby saving conference time and increasing efficiency (or productivity). Additionally, a device of a first user may be network-connected to a device of a second user so that the first user may perform video communication with the second user while viewing data possessed by the second user.

A first external device may be connected to a second external device at the network connection operation, and the method may further include transmitting data of the first external device to the second external device.

When user operations have been performed to select data from the first region 2010 on which data of the first external device is displayed and to move the selected data to the second region 2020 on which data of the second external device is displayed, the data of the first external device may be transmitted to the second external device. The data selection and movement operations may be performed through a touch input, a gesture input, and/or a remote control device.

The method for operating the image display apparatus may further include transmitting a drive signal, which varies depending on a position of a 3D viewing device, to the 3D viewing device. When a plurality of users view a 3D image from different sides of the display, drive signals appropriate for opening and closing of 3D viewing devices of the users based on positions of the 3D viewing devices may be transmitted to the 3D viewing devices.

Although FIGs. 13 to 22 mainly illustrate 3D images having a perceived positive depth such that the 3D images appear to protrude in a direction opposite to the direction toward the ground (or appear to be positioned above the display), embodiments may also be applied to 3D images having a perceived negative depth such that the 3D images appear to be sunken in the direction toward the ground (or appear to be positioned below the display).

According to an embodiment, using a display that is arranged substantially horizontally, screen arrangement and screen switching may be optimized for use of content. Additionally, content (and more specifically 3D image content) may be variously and conveniently used to improve user convenience and to provide enjoyment to users.

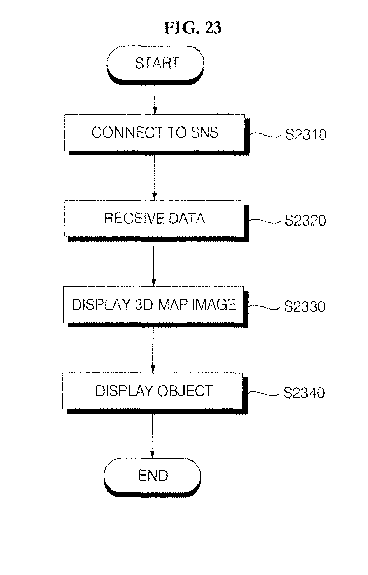

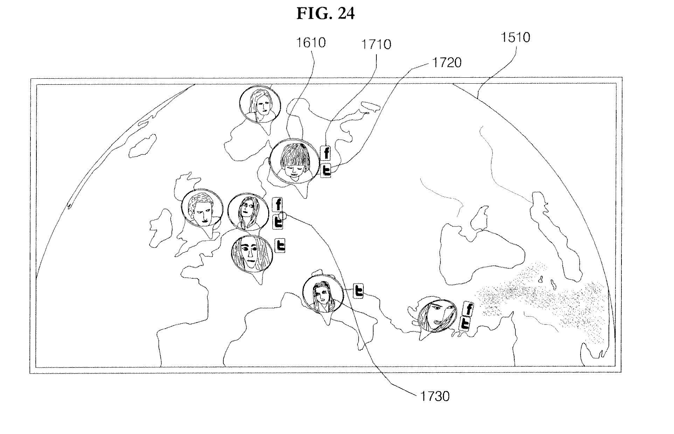

FIG. 23 is a flow chart of a method for operating an image display apparatus according to an embodiment. FIGs. 24 to 29 illustrate examples of the method for operating an image display apparatus according to the embodiment. More specifically, FIGs. 23 to 29 illustrate embodiments in which a social network service (SNS) is utilized using a display that is arranged substantially horizontal.

A method for operating an image display apparatus may include the operation of connecting to at least one social network service (SNS) (S2310), the operation of receiving data including text or an image uploaded to the connected social network service (S2320), and the operation of displaying a 3D map image on a display that is arranged substantially horizontally (S2330).

Thereafter, objects that constitute a screen of the social network service may be displayed (S2340).

In the method for operating the image display apparatus, at the object display operation S2340, an object including the text or the image may be displayed on the 3D map image based on position information of a member that has uploaded the data.

The term "member" may refer to a friend whom a user has registered through a social network service, a follower, a registered favorite target (or someone of which the user has become a fan), and name and setting details of the member may vary based on the social network service.

The 3D map image may be a 3D earth image. A 3D image and a 3D globe that extend perpendicular to the horizontal direction may be displayed on the image capture unit 180 that is arranged substantially horizontal, thereby building a social network providing a greater apparent depth (or greater perceived depth) and a greater sense of realism.

Additionally, on a 3D earth implemented on a table-shaped 3D display, users may check postings of friends around the world on a social network service, such as Twitter or Facebook.

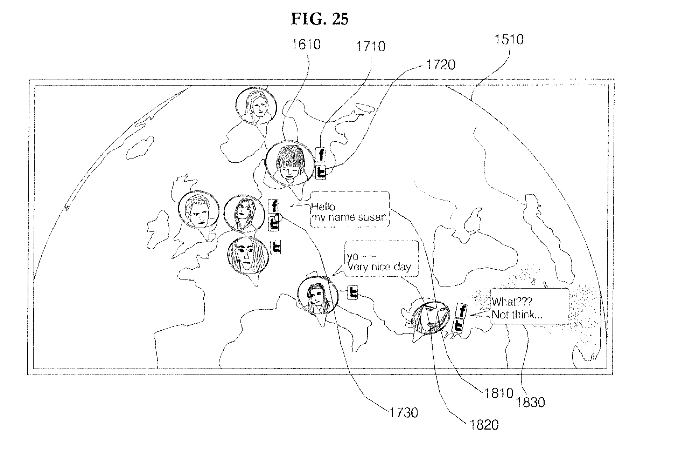

FIGs. 24 and 25 illustrate examples of a screen of an image display apparatus connected to a social network service.

Objects 1810, 1820, and 1830, each including text or an image, an object 1610 indicating a member who has uploaded data, and an image 1510 indicating a social network service to which the data is uploaded may be displayed as stereoscopic images above a map image 1510.

The image display apparatus 100 may be connected to a plurality of social network services through a wired or wireless network, and a plurality of social network services, other users in a plurality of social network services, and/or information from an external device may be displayed on the image capture unit 180.

The method may further include setting the types, number and login information of social network services (SNS) for connection, wherein the connection operation may include automatically logging into the at least one social network service based on preset login information.

The image display apparatus may be connected to a plurality of social network services and types, number, and login information of social network services (SNS) for connection may be set. Embodiments may be applied to various social network services such as Twitter, Facebook, blogs, and instant messengers. Login information may be classified into identification (ID) information and password information.

By previously storing login information of a plurality of social network services in this manner, one may automatically log into one of the social network services using the stored login information without a login procedure when connecting to the social network service at a later time.

The image display apparatus may not only connect to a plurality of social network services, but may also simultaneously display a large number of postings so that it may be possible to use social network services more conveniently than in mobile devices or other electronic devices.

The objects 1810, 1820, and 1830, each including text or an image, may be displayed as shown in FIG. 25 or objects may be displayed in a hidden mode in which information 1730 indicating a number of uploaded data items may be displayed alone as shown in FIG. 24 depending on user settings. In FIG. 25, the different display mode may be briefly denoted by dotted lines.

An object 1830 including text or an image uploaded after the user has connected to the social network service most recently may be displayed in a different size or color from other objects 1810 and 1820.

The number of displayed objects may change according to user selection. For example, the user may perform setting such that data uploaded within a predetermined period may be displayed, may set the maximum number of displayed objects, and/or may perform setting such that data uploaded after the last connection is displayed.

The position information may be a current position of the member, a region where the data is uploaded, and/or information stored in setting information of the member.

The method for operating the image display apparatus may further include receiving the position information.

More specifically, Global Positioning System (GPS) position information may be received and information of a region where the member is currently located may be displayed based on the received position information. The information of the region where the member is currently located may also be displayed based on a region where the member has uploaded the data or may be displayed based on information of a region registered in profile setting information of the member.

In the method for operating the image display apparatus, at the object display operation S2340, a position at which the object including the text or image is to be displayed on the 3D map image may be determined based on the position information of the member that has uploaded the data and the object may be displayed at the determined position at a slope that varies based on the position.

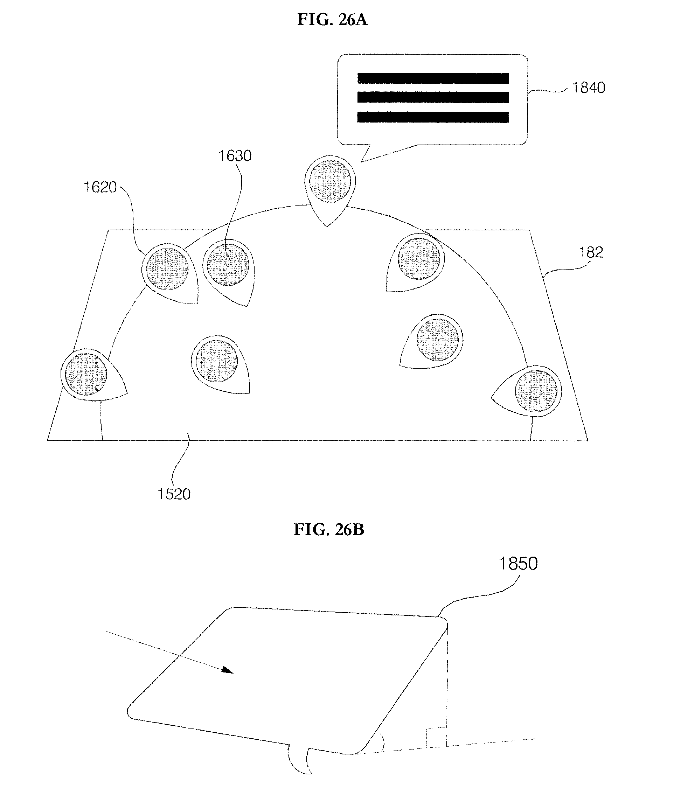

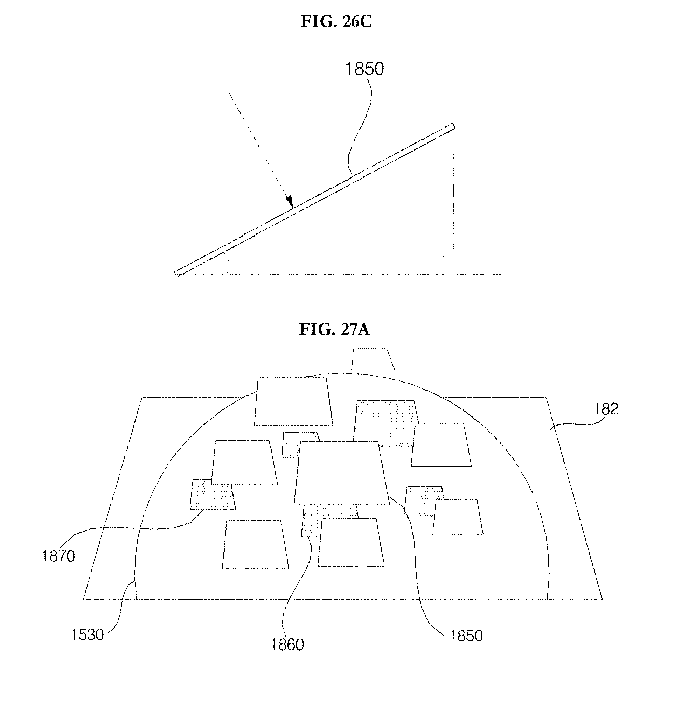

Referring to FIGs. 26A to 26C, a 3D earth image 1520 may be displayed on a display 182 that is arranged horizontally, positions 1620 and 1630 of members may be displayed on the 3D earth image 1520 based on position information of a member that has uploaded the data, and/or a registered member and an object 1840 including uploaded text or an image may also be displayed on the 3D earth image 1520.

An object 1850 may be displayed as a 3D object having a slope at an angle at which the object 1850 may be easily read by the user, based on the position at which the object is displayed.

The method may further include receiving position information of a 3D viewing device, wherein the object including the text or the image may be displayed at a slope that varies based on the position of the 3D viewing device.

The position of the 3D viewing device may be easily determined since the 3D viewing device may constantly transmit and receive signals.

The object may be displayed at an optimal slope having an angle at which the user may most conveniently read the object by adjusting the slope based on position information of the 3D viewing device and the displayed position of the object determined according to the position information of the member who has uploaded the data.

The method may further include detecting the position of the user, wherein the slope may increase in proportion to the distance between the detected position and the object. The sensing unit 160 that senses the position and gesture of the user may detect the position of the user, and the slope at which the 3D object is displayed may be adjusted using the detected position.

The display 182 that is arranged substantially horizontally may send a different image depending on the position of the user, or may transmit and receive a different signal depending on the position of the user. Accordingly, an object display may be optimized based on the position of the user.

The depth at which the object appears to protrude or appears to be sunken (or the position of the object relative to the plane of the display surface) may vary based on the priority level of the object.

In the method for operating the image display apparatus, at the object display operation S1140, the object including the text or the image may be displayed as a 3D image having a different perceived depth at a different position on the 3D earth image 1530 based on the position information of the member that has uploaded the data and the preset priority level of the object.

The object including the text or the image may be displayed at a different depth, at which the object appears to protrude or to be sunken, depending on a preset priority level of the object. In this example, the depth of the object including the text or the image, at which the object appears to protrude or to be sunken, may increase as the priority level increases.

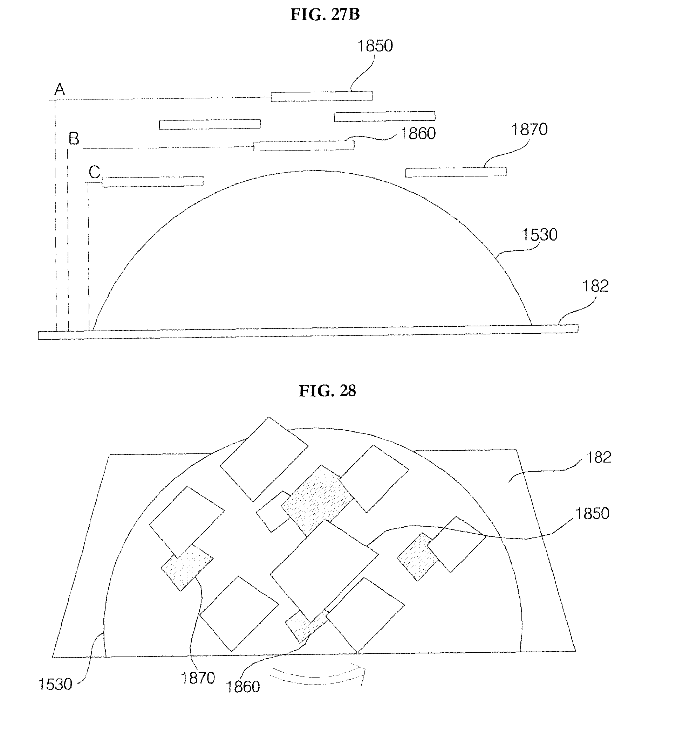

Referring to FIGs. 27A and 27B, the depth of an object 1850 having a high priority level, at which the object appears to protrude, may be set to A, the depth of an object 1860 having an intermediate priority level may be set to B, and the depth of an object 1870 having a low priority level may be set to C.

The priority level of each object may be set by the user. For example, the priority level may correspond to importance of data, the member rating, the uploaded time, etc.

The object including the text or the image may be displayed at a slope that varies depending on the displayed position of the object and may also be displayed at a slope that varies depending on the position of the user or the position information of the 3D viewing device.

FIG. 28 illustrates an example in which the 3D map image of FIG. 27A (i.e., the earth object 1530) is rotated using the remote control device 200. The earth object 1530 may be rotated as the remote control device 200 is rotated. Thus, the objects 1850, 1860, and 1870 displayed on the 3D map image (i.e., the earth object 1530) may also rotate so that the user can check objects in other regions.

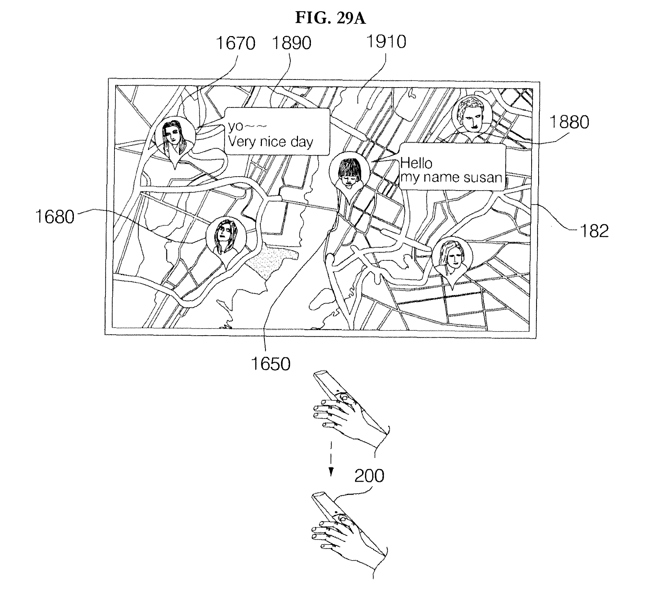

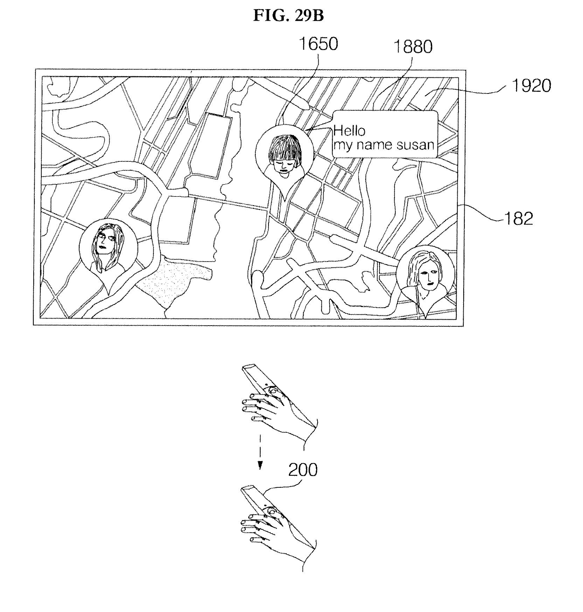

FIGs. 29A and 29B illustrate exemplary zoom-in or zoom-out using a remote control device.

FIG. 29A illustrates an example in which objects 1880 and 1890 including data and a plurality of member information 1650, 1670, and 1680 are displayed on a map image 1910. In the illustrated example, the remote control device 200 may be getting away from the display 182.

The controller 170 may perform a control operation for zooming in on a selected region according to movement of the remote control device 200. The region may be selected using the pointer of the remote control device 200.

More specifically, movement information of the remote control device 200 may be sensed with respect to the x, y, and z axes using a gyro sensor 241, information such as movement speed of the remote control device 200 may be sensed through an acceleration sensor 243, and/or the distance between the remote control device 200 and the display 182 may be sensed using a distance measurement sensor (not shown).

Zoom-in or zoom-out may be performed through movement of the remote control device 200 towards or away from the image capture unit 180. In this example, only movements of the remote control device 200 towards or away from the image capture unit 180 may be sensed while up and down movements and left and right movements of the remote control device 200 may be ignored.

FIG. 29B illustrates an example in which a map image 1920 is zoomed in and is thus enlarged. This may allow the user to easily read related information.

Although the drawings mainly illustrate 3D images having a perceived positive depth such that the 3D images appear to protrude in a direction opposite to the direction toward the ground (or appear to be positioned above the display), embodiments may also be applied to 3D images having a perceived negative depth such that they appear to be sunken in the direction toward the ground (or appear to be positioned below the display).

An image display apparatus and a method for operating the same may have a variety of advantages.

For example, content (and more specifically 3D image content) may be variously and conveniently used to improve user convenience. More specifically, social network services (SNS) may be more conveniently used.

The image display apparatus may not only connect to a plurality of social network services, but may also simultaneously display a large number of postings so that it is possible to use social network services more conveniently than in mobile devices or other electronic devices.

Additionally, by displaying uploaded data on a map image according to predetermined rules, users may more efficiently utilize a large amount of information and simultaneously identify position information of members of registered friends on one screen.

The image display apparatus and the method for operating the same are not limited in their applications to configurations and methods of the embodiments described above, and all or some of the embodiments may be selectively combined to implement various modifications.

The method for operating an image display apparatus according to an embodiment may be embodied as processor readable code stored on a processor readable medium provided in the image display apparatus. The processor readable medium may include any type of storage device that stores data that can be read by a processor. Examples of the processor readable medium may include Read-Only Memory (ROM), Random-Access Memory (RAM), CD-ROMs, magnetic tape, floppy disks, optical data storage devices, and so on. The processor readable medium may also be embodied in the form of carrier waves as signals transmitted over the Internet. The processor readable medium may also be distributed over a network of coupled processor systems so that the processor readable code is stored and executed in a distributed fashion.

Embodiments may be made in view of problems, and embodiments may provide screen arrangement and screen switching optimized for use of content to improve user convenience.

A method for operating an image display apparatus may include displaying an image including at least one object on a display that is arranged substantially horizontally, receiving an input made for the object, and displaying a perceived 3D image based on the object according to the input.

A method for operating an image display apparatus may include receiving an input signal, and displaying a perceived 3D image that appears to be sunken in a direction toward the ground or appears to protrude in a direction opposite to the direction toward the ground, based on the input signal.

A method for operating an image display apparatus may include connecting to at least one social network service, receiving data including text or an image uploaded to the connected social network service, displaying a 3D map image on a display that is arranged horizontally, and displaying an object including the text or image on the 3D map image based on position information of a member that has uploaded the data.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating an image display apparatus having a display, the method comprising:
receiving an input at the image display apparatus; and
displaying a perceived three-dimensional (3D) image on the display based on the received input.

2. The method according to claim 1, wherein the display includes a first side and a second side, and a screen is provided on the first side.

3. The method according to claim 2, further comprising: displaying an image on the screen of the display that is arranged substantially horizontal such that the screen on the first side is opposite to the second side that faces the ground, the displayed image including at least one object.

4. The method according to claim 3, wherein the input is an input with regard to the displayed object.

5. The method according to claim 3, wherein the input is a touch input or a gesture input with regard to the displayed object.

6. The method according to claim 1, wherein the perceived 3D image is an image that appears to be sunken in a direction away from the screen toward the ground or appears to protrude away from the screen in a direction opposite to the direction toward the ground.

7. The method according to claim 1, further comprising:
detecting a first position of a user relative to the image display apparatus, and
wherein displaying the perceived 3D image includes displaying the perceived first 3D image based on the detected first position of the user.

8. The method of claim 7, further comprising:
detecting a second position of the user relative to the image display apparatus, and
displaying a perceived second 3D image based on the detected second position, wherein the perceived second 3D image is at one of a different position, a different depth or a different slope than the displayed second 3D image.

9. The method according to claim 1, further comprising:
transmitting data to a 3D viewing device; and
receiving data from the 3D viewing device.

10. The method according to claim 1, further comprising transmitting, to a 3D viewing device, a drive signal that varies based on a position of the 3D viewing device.

11. The method according to claim 1, further comprising: providing the display in a substantially horizontal manner.

12. The method according to claim 1, further comprising network-connecting the image display apparatus to an external device, and
wherein receiving the input includes receiving the input from the external device.

13. The method according to claim 1, further comprising transmitting data to the external device or receiving data from the external device.

14. The method according to claim 13, wherein network-connecting the image display apparatus includes connecting the image display apparatus to a first external device and a second external device, and
wherein the method further comprises transmitting data of the first external device to the second external device.

15. The method according to claim 14, further comprising displaying, on the display, first data from the first external device in a first region of the display and second data from the second external device in a second region of the display, and
wherein transmitting data of the first external device to the second external device occurs in response to an action to move the first data from the first region to the second region.
